(19) Europäisches Patentamt / European Patent Office / Office européen des brevets

(11) EP 4 770 094 A1

(12) EUROPEAN PATENT APPLICATION
published in accordance with Art. 153(4) EPC

(43) Date of publication:
01.07.2026 Bulletin 2026/27

(21) Application number: 24856787.7

(22) Date of filing: 20.08.2024

(51) International Patent Classification (IPC):
H04N 19/593 (2014.01)    H04N 19/157 (2014.01)
H04N 19/176 (2014.01)    H04N 19/119 (2014.01)
H04N 19/105 (2014.01)    H04N 19/70 (2014.01)

(52) Cooperative Patent Classification (CPC):
H04N 19/105; H04N 19/119; H04N 19/157;
H04N 19/176; H04N 19/593; H04N 19/70

(86) International application number:
PCT/KR2024/012330

(87) International publication number:
WO 2025/042176 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.08.2023 KR 20230109137

(71) Applicant: LG Electronics Inc.
Yeongdeungpo-gu
Seoul 07336 (KR)

(72) Inventors:
• HONG, Myungoh
  Seoul 06772 (KR)
• LIM, Jaehyun
  Seoul 06772 (KR)
• CHOI, Jangwon
  Seoul 06772 (KR)

(74) Representative: Maikowski & Ninnemann
Patentanwälte Partnerschaft mbB
Postfach 15 09 20
10671 Berlin (DE)

(54) **IMAGE ENCODING/DECODING METHOD BASED ON SPATIAL GEOMETRIC PARTITION MODE, METHOD FOR TRANSMITTING BITSTREAM, AND RECORDING MEDIUM ON WHICH BITSTREAM IS STORED**

(57) An image encoding/decoding method, a bitstream transmission method, and a computer-readable recording medium storing a bitstream are provided. An image decoding method according to the present disclosure may be an image decoding method performed by an image decoding apparatus, comprising: constructing candidates for a spatial geometric partition mode (spatial geometric partition mode, SGPM), wherein each of the candidates includes a prediction mode for an intra prediction mode of each partition divided by a partition mode of the SGPM; and predicting a current block based on one of the candidates, wherein a prediction mode of a first candidate among the candidates is determined as information indicating an intra block copy prediction mode of a reference position.

FIG. 4

Start

Perform intra prediction(determination of intra prediction mode/type, derivation of neighboring reference samples, generation of prediction samples) — S400

Residual process(derivation of residual samples based on prediction samples) — S410

Encode image/video information including prediction information and residual information — S420

End

## Description

[Technical Field]

The present disclosure relates to an image encoding/decoding method, a method for transmitting a bitstream, and a recording medium storing a bitstream, and to prediction based on a spatial geometric partitioning mode.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

An object of the present disclosure is to provide an image encoding/decoding method and apparatus with improved encoding/decoding efficiency.

In addition, an object of the present disclosure is to propose an efficient intra mode coding method.

In addition, an object of the present disclosure is to propose a method for configuring candidates for a spatial geometric partitioning mode.

In addition, an object of the present disclosure is to propose a method for utilizing block vector information of a spatial geometric partitioning mode.

In addition, an object of the present disclosure is to provide a non-transitory computer-readable recording medium storing a bitstream generated by an image encoding method according to the present disclosure.

In addition, an object of the present disclosure is to provide a non-transitory computer-readable recording medium storing a bitstream that is received and decoded by an image decoding apparatus according to the present disclosure and used for reconstruction of an image.

In addition, an object of the present disclosure is to provide a method for transmitting a bitstream generated by an image encoding method according to the present disclosure.

The technical problems to be achieved by the present disclosure are not limited to the technical problems described above, and other technical problems not described above will be clearly understood by a person having ordinary skill in the art to which the present disclosure pertains from the following description.

[Technical Solution]

An image decoding method according to one aspect of the present disclosure is an image decoding method performed by an image decoding apparatus, the image decoding method comprising: configuring candidates for a spatial geometric partition mode (spatial geometric partition mode, SGPM) - wherein each of the candidates includes a prediction mode for an intra prediction mode of each partition partitioned by a partitioning mode of the SGPM -; and predicting a current block based on one of the candidates, wherein a prediction mode of a first candidate among the candidates is determined based on information indicating an intra block copy prediction mode of a reference position.

An image encoding method according to another aspect of the present disclosure is an image encoding method performed by an image encoding apparatus, the image encoding method comprising: configuring candidates for a spatial geometric partition mode (spatial geometric partition mode, SGPM) - wherein each of the candidates includes a prediction mode for an intra prediction mode of each partition partitioned by a partitioning mode of the SGPM -; and predicting a current block based on one of the candidates, wherein a prediction mode of a first candidate among the candidates is determined based on information indicating an intra block copy prediction mode of a reference position.

A computer-readable recording medium according to another aspect of the present disclosure may store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description of the present disclosure to be described later, and do not limit the scope of the present disclosure.

[Advantageous Effects]

According to the present disclosure, an image encoding/decoding method and apparatus with improved encoding/decoding efficiency may be provided.

In addition, according to the present disclosure, since candidates for a spatial geometric partition mode may be effectively configured, prediction performance may be improved.

In addition, according to the present disclosure, coding performance may be improved by variously utilizing block vectors of a spatial geometric partition mode.

In addition, according to the present disclosure, a non-transitory computer-readable recording medium storing a bitstream generated by an image encoding method according to the present disclosure may be provided.

In addition, according to the present disclosure, a non-transitory computer-readable recording medium storing a bitstream that is received and decoded by an image decoding apparatus according to the present disclosure and used for reconstruction of an image may be provided.

In addition, according to the present disclosure, a method for transmitting a bitstream generated by an image encoding method may be provided.

The effects obtainable in the present disclosure are not limited to the effects described above, and other effects not described above will be clearly understood by a person having ordinary skill in the art to which the present disclosure pertains from the following description.

[Description of Drawings]

Fig. 1 is a diagram schematically illustrating a video coding system to which an embodiment according to the present disclosure may be applied.

Fig. 2 is a diagram schematically illustrating an image encoding apparatus to which an embodiment according to the present disclosure may be applied.

Fig. 3 is a diagram schematically illustrating an image decoding apparatus to which an embodiment according to the present disclosure may be applied.

Fig. 4 is a flowchart illustrating an image encoding method based on intra prediction.

Fig. 5 is a diagram schematically illustrating an intra prediction unit in an image encoding apparatus.

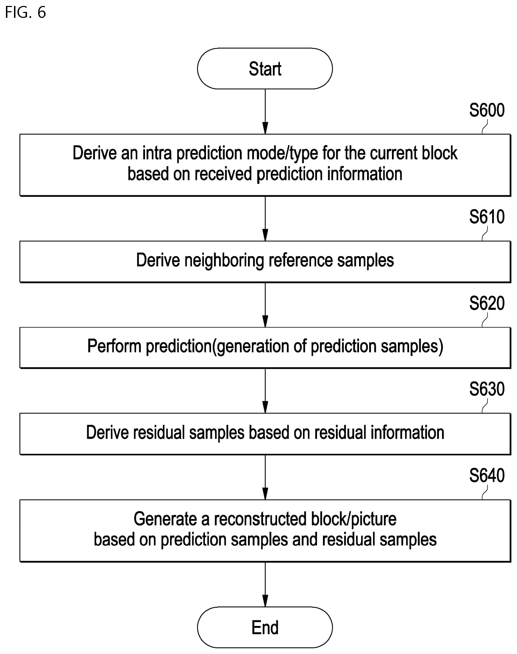

Fig. 6 is a flowchart illustrating an image encoding method based on intra prediction.

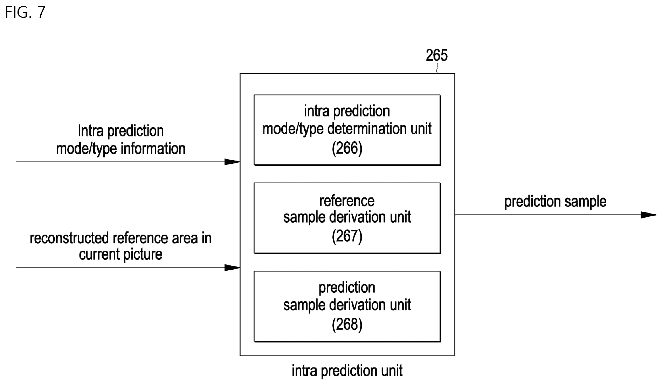

Fig. 7 is a diagram schematically illustrating an intra prediction unit in an image decoding apparatus.

Fig. 8 is a flowchart illustrating an intra prediction mode signaling method performed in an image encoding apparatus.

Fig. 9 is a flowchart illustrating an intra prediction mode determination method performed in an image decoding apparatus.

Fig. 10 is a diagram for explaining a method of configuring a HoG (histogram of gradient) in DIMD (decoder-side intra mode derivation).

Fig. 11 is a diagram for explaining a method of configuring a prediction block when DIMD is applied.

Fig. 12 is a diagram for explaining an example of a search region for intra template matching.

Fig. 13 is a diagram for explaining an example in which a block vector derived from intra template matching is used for intra block copy.

Fig. 14 is a diagram for explaining an example of intra block copy.

Fig. 15 is a diagram for explaining a spatial geometric partition mode.

Fig. 16 is a diagram for explaining an example of a template-based multiple reference line intra prediction mode.

Fig. 17 is a diagram for explaining an example of a DVB (direct block vector) mode.

Fig. 18 is a flowchart illustrating an image encoding method and an image decoding method according to one embodiment of the present disclosure.

Fig. 19 is a diagram for explaining an example of a method of deriving an error in a spatial geometric partition mode.

Fig. 20 is a diagram for explaining an example of a partitioning direction and adjacent reference positions according thereto in a spatial geometric partition mode.

Fig. 21 is a diagram for explaining examples of adjacent reference positions and non-adjacent reference positions in a spatial geometric partition mode.

Fig. 22 is a diagram exemplarily illustrating a content streaming system to which an embodiment according to the present disclosure may be applied.

[Modes of the Invention]

Hereinafter, embodiments of the present disclosure will be described in detail with reference to the accompanying drawings so that a person having ordinary skill in the art to which the present disclosure pertains can easily practice the present disclosure. However, the present disclosure may be implemented in various different forms and is not limited to the embodiments described herein.

In describing embodiments of the present disclosure, when it is determined that a detailed description of a well-known configuration or function may obscure the gist of the present disclosure, the detailed description thereof will be omitted. In addition, in the drawings, parts not related to the description of the present disclosure are omitted, and similar reference numerals are assigned to similar parts.

In the present disclosure, when a component is described as being "connected", "coupled", or "linked" to another component, this may include not only a direct connection relationship but also an indirect connection relationship in which another component is present therebetween. In addition, when a component is described as "including" or "having" another component, this means that another component may be further included, unless otherwise specified to the contrary.

In the present disclosure, terms such as first and second are used only for the purpose of distinguishing one component from another component, and do not limit an order or importance between components unless otherwise specified. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe respective features, and do not necessarily mean that the components are separated. That is, a plurality of components may be integrated into one hardware or software unit, or one component may be distributed into a plurality of hardware or software units. Accordingly, such integrated or distributed embodiments are also included in the scope of the present disclosure, even if not separately mentioned.

In the present disclosure, components described in various embodiments do not necessarily mean essential components, and some components may be optional components. Accordingly, an embodiment composed of a subset of the components described in one embodiment is also included in the scope of the present disclosure. In addition, an embodiment including other components in addition to the components described in various embodiments is also included in the scope of the present disclosure.

The present disclosure relates to image encoding and decoding, and terms used in the present disclosure may have meanings commonly used in the technical field to which the present disclosure pertains, unless newly defined in the present disclosure.

In the present disclosure, a "picture" generally refers to a unit representing one image at a specific time, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may refer to a minimum unit constituting one picture (or image). In addition, a "sample" may be used as a term corresponding to a pixel. A sample may generally represent a pixel or a pixel value, and may represent only a pixel/pixel value of a luma component or only a pixel/pixel value of a chroma component.

In the present disclosure, a "unit" may represent a basic unit of image processing. A unit may include at least one of a specific region of a picture and information related to the region. A unit may be used interchangeably with terms such as "sample array", "block", or "area", depending on the case. In a general case, an $M \times N$ block may include a set (or array) of samples (or a sample array) or transform coefficients arranged in M columns and N rows.

In the present disclosure, a "current block" may refer to one of a "current coding block", a "current coding unit", a "block to be encoded", a "block to be decoded", or a "block to be processed". When prediction is performed, the "current block" may refer to a "current prediction block" or a "block to be predicted". When transform (inverse transform)/quantization (dequantization) is performed, the "current block" may refer to a "current transform block" or a "block to be transformed". When filtering is performed, the "current block" may refer to a "block to be filtered".

In the present disclosure, unless explicitly stated as a chroma block, the "current block" may refer to a block including both a luma component block and a chroma component block, or may refer to a "luma block of the current block". The luma component block of the current block may be explicitly expressed with a description indicating a luma component block, such as a "luma block" or a "current luma block". In addition, the chroma component block of the current block may be explicitly expressed with a description indicating a chroma component block, such as a "chroma block" or a "current chroma block".

In the present disclosure, "/" and "," may be interpreted as "and/or". For example, "A/B" and "A, B" may be interpreted as "A and/or B". In addition, "A/B/C" and "A, B, C" may mean at least one of A, B, and/or C.

In the present disclosure, the term "or" may be interpreted as "and/or". For example, "A or B" may mean: 1) A only, 2) B only, or 3) both A and B. Alternatively, in the present disclosure, the term "or" may mean "additionally or alternatively".

## Overview of video coding system

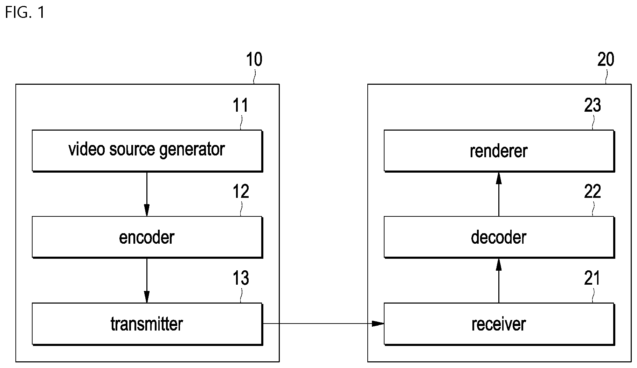

Fig. 1 is a diagram schematically illustrating a video coding system to which an embodiment according to the present disclosure may be applied.

A video coding system according to one embodiment may include an encoding apparatus (10) and a decoding apparatus (20). The encoding apparatus (10) may deliver encoded video and/or image information or data to the decoding apparatus (20) through a digital storage medium or a network in the form of a file or streaming.

The encoding apparatus (10) according to one embodiment may include a video source generator (11), an encoder (12), and a transmitter (13). The decoding apparatus (20) according to one embodiment may include a receiver (21), a decoder (22), and a renderer (23). The encoder (12) may be referred to as a video/image encoder, and the decoder (22) may be referred to as a video/image decoder. The transmitter (13) may be included in the encoder (12). The receiver (21) may be included in the decoder (22). The renderer (23) may include a display unit, or the display unit may be configured as a separate device or an external component.

The video source generator (11) may acquire video/images through a video/image capture process, a synthesis process, or a generation process. The video source generator (11) may include a video/image capture device and/or a video/image generation device. The video/image capture device may include, for example, one or more cameras, a video/image archive including previously captured video/images, and the like. The video/image generation device may include, for example, a computer, a tablet, a smartphone, and the like, and may generate video/images (electronically). For example, virtual video/images may be generated through a computer or the like, and in this case, a video/image capture process may be replaced with a process of generating related data.

The encoder (12) may encode input video/images. The encoder (12) may perform a series of procedures such as prediction, transform, and quantization for compression and encoding efficiency. The encoder (12) may output encoded data (encoded video/image information) in the form of a bitstream.

The transmitter (13) may obtain encoded video/image information or data output in the form of a bitstream, and may deliver the same to the receiver (21) of the decoding apparatus (20) or another external object through a digital storage medium or a network in the form of a file or streaming. The digital storage medium may include various storage media such as USB, SD, CD, DVD, Blu-ray, HDD, SSD, and the like. The transmitter (13) may include elements for generating a media file through a predetermined file format, and may include elements for transmission through a broadcasting/communication network. The transmitter (13) may be provided as a transmission apparatus separate from the encoding apparatus (12), and in this case, the transmission apparatus may include at least one processor for obtaining encoded video/image information or data output in the form of a bitstream and a transmitter for delivering the same in the form of a file or streaming. The receiver (21) may extract/receive the bitstream from the storage medium or the network and deliver the bitstream to the decoder (22).

The decoder (22) may decode video/images by performing a series of procedures such as dequantization, inverse transform, and prediction corresponding to operations of the encoder (12).

The renderer (23) may render decoded video/images. The rendered video/images may be displayed through the display unit.

## Overview of image encoding apparatus

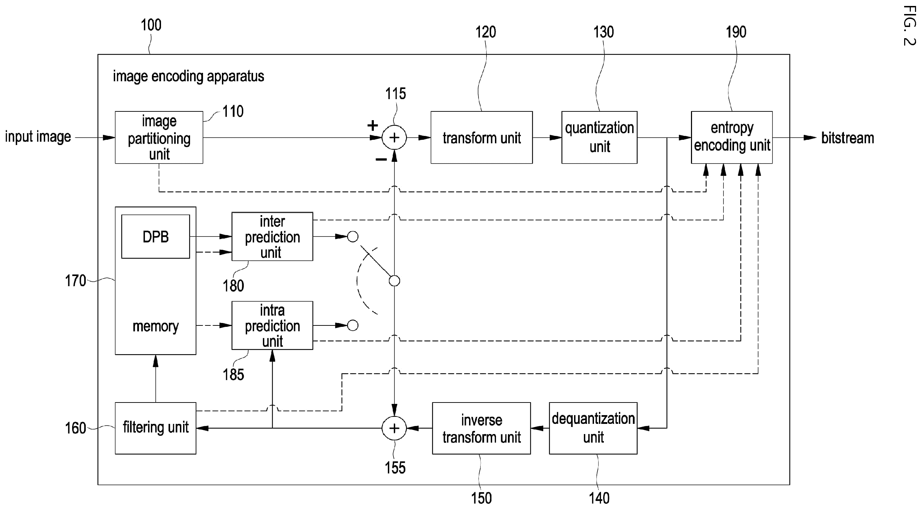

Fig. 2 is a diagram schematically illustrating an image encoding apparatus to which an embodiment according to the present disclosure may be applied.

As illustrated in Fig. 2, an image encoding apparatus (100) may include an image partitioning unit (110), a subtractor (115), a transform unit (120), a quantization unit (130), an dequantization unit (140), an inverse transform unit (150), an adder (155), a filtering unit (160), a memory (170), an inter prediction unit (180), an intra prediction unit (185), and an entropy encoding unit (190). The inter prediction unit (180) and the intra prediction unit (185) may be collectively referred to as a "prediction unit". The transform unit (120), the quantization unit (130), the dequantization unit (140), and the inverse transform unit (150) may be included in a residual processing unit. The residual processing unit may further include the subtractor (115).

All or at least some of a plurality of components constituting the image encoding apparatus (100) may be implemented as one hardware component (for example, an encoder or a processor) according to an embodiment. In addition, the memory (170) may include a decoded picture buffer (DPB), and may be implemented by a digital storage medium.

The image partitioning unit (110) may partition an input image (or picture or frame) input to the image encoding apparatus (100) into one or more processing units. As an example, the processing unit may be referred to as a coding unit (coding unit, CU). The coding unit may be obtained by recursively partitioning a coding tree unit (coding tree unit, CTU) or a largest coding unit (largest coding unit, LCU) according to a QT/BT/TT (quad-tree/binary-tree/ternary-tree) structure. For example, one coding unit may be partitioned into a plurality of coding units of a deeper depth based on a quad-tree structure, a binary-tree structure, and/or a ternary-tree structure. For partitioning of a coding unit, a quad-tree structure may be applied first, and a binary-tree structure and/or a ternary-tree structure may be applied later. A coding procedure according to the present disclosure may be performed based on a final coding unit that is no longer partitioned. The largest coding unit may be used as the final coding unit, or a coding unit of a lower depth obtained by partitioning the largest coding unit may be used as the final coding unit. Here, the coding procedure may include procedures such as prediction, transform, and/or reconstruction to be described later. As another example, a processing unit for the coding procedure may be a prediction unit (PU: prediction unit) or a transform unit (TU: transform unit). The prediction unit and the transform unit may be partitioned or partitioned from the final coding unit, respectively. The prediction unit may be a unit of sample prediction, and the transform unit may be a unit for deriving transform coefficients and/or a unit for deriving a residual signal from transform coefficients.

The prediction unit (the inter prediction unit (180) or the intra prediction unit (185)) may perform prediction for a block to be processed (a current block), and may generate a predicted block including prediction samples for the current block. The prediction unit may determine whether intra prediction or inter prediction is applied on a current block or CU basis. The prediction unit may generate various information related to prediction of the current block and deliver the information to the entropy encoding unit (190). Information related to prediction may be encoded by the entropy encoding unit (190) and output in the form of a bitstream.

The intra prediction unit (185) may predict the current block by referring to samples in a current picture. The referenced samples may be located in a neighborhood of the current block or may be located apart therefrom according to an intra prediction mode and/or an intra prediction technique. Intra prediction modes may include a plurality of non-directional modes and a plurality of directional modes. The non-directional modes may include, for example, a DC mode and a planar mode. The directional modes may include, for example, 33 directional prediction modes or 65 directional prediction modes according to a degree of fineness of a prediction direction. However, this is merely an example, and more or fewer directional prediction modes may be used depending on a setting. The intra prediction unit (185) may determine a prediction mode applied to the current block by using a prediction mode applied to a neighboring block.

The inter prediction unit (180) may derive a predicted block for the current block based on a reference block (a reference sample array) specified by a motion vector on a reference picture. In this case, in order to reduce an amount of motion information transmitted in an inter prediction mode, motion information may be predicted on a block, sub-block, or sample basis based on correlation of motion information between a neighboring block and the current block. The motion information may include a motion vector and a reference picture index. The motion information may further include information on an inter prediction direction (L0 prediction, L1 prediction, bi-prediction, etc.). In the case of inter prediction, the neighboring block may include a spatial neighboring block existing in a current picture and a temporal neighboring block existing in a reference picture. The reference picture including the reference block and the reference picture including the temporal neighboring block may be the same or may be different from each other. The temporal neighboring block may be referred to as a collocated reference block or a collocated CU (colCU). The reference picture including the temporal neighboring block may be referred to as a collocated picture (colPic). For example, the inter prediction unit (180) may configure a motion information candidate list based on neighboring blocks, and may generate information indicating which candidate is used to derive a motion vector and/or a reference picture index of the current block. Inter prediction may be performed based on various prediction modes, and for example, in the case of a skip mode and a merge mode, the inter prediction unit (180) may use motion information of a neighboring block as motion information of the current block. In the case of the skip mode, unlike the merge mode, a residual signal may not be transmitted. In the case of a motion vector prediction (MVP) mode, a motion vector of a neighboring block may be used as a motion vector predictor, and a motion vector of the current block may be signaled by encoding a motion vector difference and an indicator for the motion vector predictor. The motion vector difference may mean a difference between the motion vector of the current block and the motion vector predictor.

The prediction unit may generate a prediction signal based on various prediction methods and/or prediction techniques to be described later. For example, the prediction unit may apply not only intra prediction or inter prediction for prediction of the current block, but also intra prediction and inter prediction simultaneously. A prediction method in which intra prediction and inter prediction are simultaneously applied for prediction of the current block may be referred to as combined inter and intra prediction (CIIP). In addition, the prediction unit may perform intra block copy (intra block copy, IBC) for prediction of the current block. The intra block copy may be used, for example, for coding of content images/videos such as games, as in screen content coding (SCC). IBC is a method of predicting a current block by using a reconstructed reference block in a current picture located at a position separated from the current block by a predetermined distance. When IBC is applied, a position of a reference block in the current picture may be encoded as a vector (a block vector) corresponding to the predetermined distance. IBC basically performs prediction within the current picture, but may be performed similarly to inter prediction in that a reference block is derived from the current picture. That is, IBC may use at least one of inter prediction techniques described in the present disclosure.

A prediction signal generated through the prediction unit may be used to generate a reconstructed signal or may be used to generate a residual signal. The subtractor (115) may generate a residual signal (residual signal, residual block, residual sample array) by subtracting a prediction signal (a predicted block, a predicted sample array) output from the prediction unit from an input image signal (an original block, an original sample array). The generated residual signal may be transmitted to the transform unit (120).

The transform unit (120) may generate transform coefficients by applying a transform technique to the residual signal. For example, the transform technique may include at least one of a discrete cosine transform (DCT), a discrete sine transform (DST), a Karhunen-Loeve transform (KLT), a graph-based transform (GBT), or a conditionally non-linear transform (CNT). Here, the GBT refers to a transform obtained from a graph when relationship information between pixels is represented as a graph. The CNT refers to a transform obtained based on generating a prediction signal by using all previously reconstructed pixels. The transform process may be applied to a pixel block having a square shape of the same size, or may be applied to a block having a non-square variable size.

The quantization unit (130) may quantize the transform coefficients and transmit the quantized transform coefficients to the entropy encoding unit (190). The entropy encoding unit (190) may encode a quantized signal (information on the quantized transform coefficients) and output the encoded signal as a bitstream. The information on the quantized transform coefficients may be referred to as residual information. The quantization unit (130) may rearrange block-shaped quantized transform coefficients into a one-dimensional vector form based on a coefficient scan order, and may generate information on the quantized transform coefficients based on the one-dimensional vector form of the quantized transform coefficients.

The entropy encoding unit (190) may perform various encoding methods such as exponential Golomb coding, context-adaptive variable length coding (CAVLC), context-adaptive binary arithmetic coding (CABAC), and the like. The entropy encoding unit (190) may encode, together with or separately from the quantized transform coefficients, information required for video/image reconstruction (for example, values of syntax elements). Encoded information (e.g., encoded video/image information) may be transmitted or stored in the form of a bitstream in network abstraction layer (NAL) unit units. The video/image information may further include information on various parameter sets such as an adaptation parameter set (APS), a picture parameter set (PPS), a sequence parameter set (SPS), or a video parameter set (VPS). In addition, the video/image information may further include general constraint information. Signaling information, transmitted information, and/or syntax elements mentioned in the present disclosure may be encoded through the encoding procedure described above and included in the bitstream.

The bitstream may be transmitted through a network or stored in a digital storage medium. Here, the network may include a broadcasting network and/or a communication network, and the digital storage medium may include various storage media such as USB, SD, CD, DVD, Blu-ray, HDD, SSD, and the like. A transmitter (not illustrated) for transmitting a signal output from the entropy encoding unit (190) and/or a storage unit (not illustrated) for storing the signal may be provided as an internal or external element of the image encoding apparatus (100), or the transmitter may be provided as a component of the entropy encoding unit (190).

Quantized transform coefficients output from the quantization unit (130) may be used to generate a residual signal. For example, a residual signal (a residual block or residual samples) may be reconstructed by applying dequantization and inverse transform to the quantized transform coefficients through the dequantization unit (140) and the inverse transform unit (150).

The adder (155) may generate a reconstructed signal (a reconstructed picture, a reconstructed block, or a reconstructed sample array) by adding the reconstructed residual signal to a prediction signal output from the inter prediction unit (180) or the intra prediction unit (185). When there is no residual for a block to be processed, such as when a skip mode is applied, a predicted block may be used as a reconstructed block. The adder (155) may be referred to as a reconstruction unit or a reconstructed block generation unit. The generated reconstructed signal may be used for intra prediction of a next block to be processed in the current picture, or may be used for inter prediction of a next picture after filtering as described later.

The filtering unit (160) may improve subjective and/or objective image quality by applying filtering to the reconstructed signal. For example, the filtering unit (160) may generate a modified reconstructed picture by applying various filtering methods to a reconstructed picture, and may store the modified reconstructed picture in the memory (170), specifically in a DPB of the memory (170). The various filtering methods may include, for example, deblocking filtering, sample adaptive offset, adaptive loop filtering, bilateral filtering, and the like. The filtering unit (160) may generate various information related to filtering, as will be described later in descriptions of respective filtering methods, and deliver the information to the entropy encoding unit (190). Information related to filtering may be encoded by the entropy encoding unit (190) and output in the form of a bitstream.

The modified reconstructed picture transmitted to the memory (170) may be used as a reference picture by the inter prediction unit (180). Through this, when inter prediction is applied, the image encoding apparatus (100) may avoid a prediction mismatch between the image encoding apparatus (100) and an image decoding apparatus, and may also improve encoding efficiency.

The DPB in the memory (170) may store modified reconstructed pictures to be used as reference pictures by the inter prediction unit (180). The memory (170) may store motion information of blocks for which motion information is derived (or encoded) in a current picture and/or motion information of blocks in already reconstructed pictures. The stored motion information may be delivered to the inter prediction unit (180) to be used as motion information of spatial neighboring blocks or motion information of temporal neighboring blocks. The memory (170) may store reconstructed samples of reconstructed blocks in the current picture and deliver the reconstructed samples to the intra prediction unit (185).

## Overview of image decoding apparatus

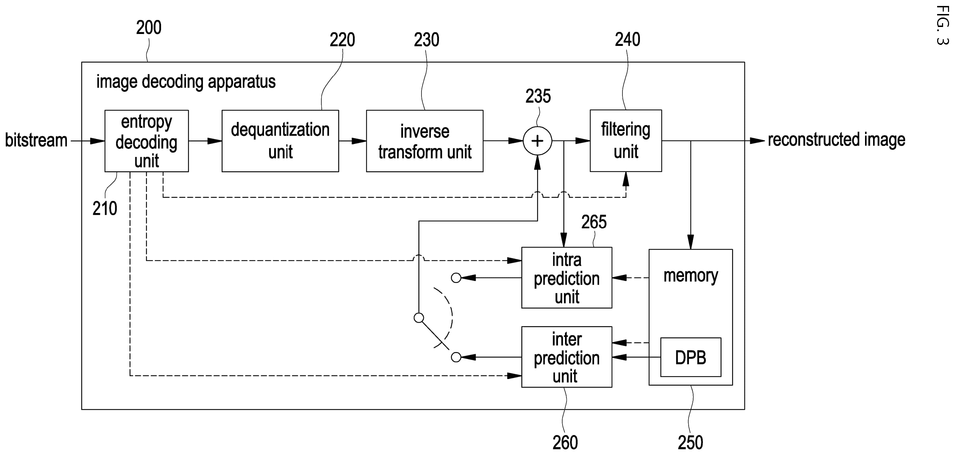

Fig. 3 is a diagram schematically illustrating an image decoding apparatus to which an embodiment according to the present disclosure may be applied.

As illustrated in Fig. 3, an image decoding apparatus (200) may include an entropy decoding unit (210), an dequantization unit (220), an inverse transform unit (230), an adder (235), a filtering unit (240), a memory (250), an inter prediction unit (260), and an intra prediction unit (265). The inter prediction unit (260) and the intra prediction unit (265) may be collectively referred to as a "prediction unit". The dequantization unit (220) and the inverse transform unit (230) may be included in a residual processing unit.

All or at least some of a plurality of components constituting the image decoding apparatus (200) may be implemented as one hardware component (for example, a decoder or a processor) according to an embodiment. In addition, the memory (170) may include a decoded picture buffer (DPB), and may be implemented by a digital storage medium.

An image decoding apparatus (200) that has received a bitstream including video/image information may reconstruct an image by performing a process corresponding to a process performed in the image encoding apparatus (100) of Fig. 2. For example, the image decoding apparatus (200) may perform decoding by using a processing unit applied in the image encoding apparatus. Accordingly, a processing unit for decoding may be, for example, a coding unit. The coding unit may be a coding tree unit, or may be obtained by partitioning a largest coding unit. In addition, a reconstructed image signal decoded and output through the image decoding apparatus (200) may be reproduced through a playback apparatus (not illustrated).

The image decoding apparatus (200) may receive a signal output from the image encoding apparatus of Fig. 2 in the form of a bitstream. The received signal may be decoded through the entropy decoding unit (210). For example, the entropy decoding unit (210) may parse the bitstream and derive information (for example, video/image information) required for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may additionally use the information on the parameter sets and/or the general constraint information in order to decode an image. Signaling information, received information, and/or syntax elements mentioned in the present disclosure may be obtained from the bitstream by being decoded through the decoding procedure. For example, the entropy decoding unit (210) may decode information in the bitstream based on a coding method such as exponential Golomb coding, CAVLC, or CABAC, and may output values of syntax elements required for image reconstruction and quantized values of transform coefficients for residuals. More specifically, a CABAC entropy decoding method may receive bins corresponding to each syntax element from the bitstream, determine a context model by using syntax element information to be decoded and decoding information of neighboring blocks and a block to be decoded or information of symbols/bins decoded in a previous stage, predict an occurrence probability of a bin according to the determined context model, and perform arithmetic decoding of the bin to generate a symbol corresponding to a value of each syntax element. In this case, the CABAC entropy decoding method may update the context model by using information of the decoded symbol/bin after determination of the context model, for a context model of a next symbol/bin. Among information decoded by the entropy decoding unit (210), information related to prediction may be provided to the prediction unit (including the inter prediction unit (260) and the intra prediction unit (265)), and residual values entropy-decoded by the entropy decoding unit (210), that is, quantized transform coefficients and related parameter information, may be input to the dequantization unit (220). In addition, among information decoded by the entropy decoding unit (210), information related to filtering may be provided to the filtering unit (240). Meanwhile, a receiver (not illustrated) for receiving a signal output from the image encoding apparatus may be additionally provided as an internal or external element of the image decoding apparatus (200), or the receiver may be provided as a component of the entropy decoding unit (210).

Meanwhile, the image decoding apparatus according to the present disclosure may be referred to as a video/image/picture decoding apparatus. The image decoding apparatus may include an information decoder (a video/image/picture information decoder) and/or a sample decoder (a video/image/picture sample decoder). The information decoder may include the entropy decoding unit (210), and the sample decoder may include at least one of the dequantization unit (220), the inverse transform unit (230), the adder (235), the filtering unit (240), the memory (250), the inter prediction unit (260), and the intra prediction unit (265).

The dequantization unit (220) may dequantize quantized transform coefficients and output transform coefficients. The dequantization unit (220) may rearrange the quantized transform coefficients into a two-dimensional block form. In this case, the rearrangement may be performed based on a coefficient scan order performed in the image encoding apparatus. The dequantization unit (220) may perform dequantization on the quantized transform coefficients by using a quantization parameter (for example, quantization step size information), and may obtain transform coefficients.

The inverse transform unit (230) may detransform the transform coefficients and obtain a residual signal (a residual block, a residual sample array).

The prediction unit may perform prediction for the current block and generate a predicted block including prediction samples for the current block. The prediction unit may determine whether intra prediction or inter prediction is applied to the current block based on the information related to the prediction output from the entropy decoding unit (210), and may determine a specific intra/inter prediction mode (prediction technique).

That the prediction unit may generate a prediction signal based on various prediction methods (techniques) to be described later is the same as described in the description of the prediction unit of the image encoding apparatus (100).

The intra prediction unit (265) may predict the current block by referring to samples in a current picture. The description of the intra prediction unit (185) may be equally applied to the intra prediction unit (265).

The inter prediction unit (260) may derive a predicted block for the current block based on a reference block (a reference sample array) specified by a motion vector on a reference picture. In this case, in order to reduce an amount of motion information transmitted in an inter prediction mode, motion information may be predicted on a block, sub-block, or sample basis based on correlation of motion information between a neighboring block and the current block. The motion information may include a motion vector and a reference picture index. The motion information may further include information on an inter prediction direction (L0 prediction, L1 prediction, bi-prediction, etc.). In the case of inter prediction, the neighboring block may include a spatial neighboring block existing in a current picture and a temporal neighboring block existing in a reference picture. For example, the inter prediction unit (260) may construct a motion information candidate list based on neighboring blocks, and may derive a motion vector and/or a reference picture index of the current block based on received candidate selection information. Inter prediction may be performed based on various prediction modes (techniques), and the information related to the prediction may include information indicating a mode (technique) of inter prediction for the current block.

The adder (235) may generate a reconstructed signal (a reconstructed picture, a reconstructed block, a reconstructed sample array) by adding the obtained residual signal to a prediction signal (a predicted block, a predicted sample array) output from the prediction unit (including the inter prediction unit (260) and/or the intra prediction unit (265)). When there is no residual for a block to be processed, such as when a skip mode is applied, a predicted block may be used as a reconstructed block. The description of the adder (155) may be equally applied to the adder (235). The adder (235) may be referred to as a reconstruction unit or a reconstructed block generation unit. The generated reconstructed signal may be used for intra prediction of a next block to be processed in the current picture, or may be used for inter prediction of a next picture after filtering as described later.

The filtering unit (240) may improve subjective and/or objective image quality by applying filtering to the reconstructed signal. For example, the filtering unit (240) may generate a modified reconstructed picture by applying various filtering methods to a reconstructed picture, and may store the modified reconstructed picture in the memory (250), specifically in a DPB of the memory (250). The various filtering methods may include, for example, deblocking filtering, sample adaptive offset, adaptive loop filtering, bilateral filtering, and the like.

A (modified) reconstructed picture stored in the DPB of the memory (250) may be used as a reference picture by the inter prediction unit (260). The memory (250) may store motion information of blocks for which motion information is derived (or decoded) in a current picture and/or motion information of blocks in already reconstructed pictures. The stored motion information may be delivered to the inter prediction unit (260) to be used as motion information of spatial neighboring blocks or motion information of temporal neighboring blocks. The memory (250) may store reconstructed samples of reconstructed blocks in the current picture and deliver the reconstructed samples to the intra prediction unit (265).

In the present specification, embodiments described in the filtering unit (160), the inter prediction unit (180), and the intra prediction unit (185) of the image encoding apparatus (100) may be applied in the same or corresponding manner to the filtering unit (240), the inter prediction unit (260), and the intra prediction unit (265) of the image decoding apparatus (200), respectively.

## General intra prediction

Intra prediction may represent prediction for generating prediction samples for a current block based on reference samples within a picture to which the current block belongs (hereinafter, a current picture). When intra prediction is applied to the current block, neighboring reference samples to be used for intra prediction of the current block may be derived. The neighboring reference samples of the current block may include a total of $2 \times nH$ samples including samples adjacent to a left boundary of the current block having a size of $nW \times nH$ and samples neighboring a bottom-left position, a total of 2×nW samples including samples adjacent to a top boundary of the current block and samples neighboring a top-right position, and one sample neighboring a top-left position of the current block. Alternatively, the neighboring reference samples of the current block may include multiple columns of top neighboring samples and multiple rows of left neighboring samples. In addition, the neighboring reference samples of the current block may include a total of nH samples adjacent to a right boundary of the current block having a size of nW×nH, a total of nW samples adjacent to a bottom boundary of the current block, and one sample neighboring a bottom-right position of the current block.

However, some of the neighboring reference samples of the current block may not yet be decoded or may not be available. In this case, the image decoding apparatus (200) may configure neighboring reference samples to be used for prediction by substituting unavailable samples with available samples. Alternatively, neighboring reference samples to be used for prediction may be configured through interpolation of available samples.

When the neighboring reference samples are derived, (i) prediction samples may be derived based on an average or interpolation of neighboring reference samples of the current block, and (ii) the prediction samples may be derived based on reference samples existing in a specific (prediction) direction with respect to the prediction samples among the neighboring reference samples of the current block. Case (i) may be referred to as a non-directional mode or a non-angular mode, and case (ii) may be referred to as a directional mode or an angular mode. In addition, the prediction samples may be generated through interpolation between a second neighboring sample located in a direction opposite to a prediction direction of an intra prediction mode of the current block with respect to the prediction samples of the current block and a first neighboring sample. The above-described case may be referred to as linear interpolation intra prediction (LIP). In addition, chroma prediction samples may be generated based on luma samples using a linear model. This case may be referred to as an LM mode. In addition, temporary prediction samples of the current block may be derived based on filtered neighboring reference samples, and prediction samples of the current block may be derived by performing a weighted sum of at least one reference sample derived according to the intra prediction mode among existing neighboring reference samples, that is, unfiltered neighboring reference samples, and the temporary prediction samples. The above-described case may be referred to as position dependent intra prediction (PDPC). In addition, intra prediction coding may be performed by selecting a reference sample line having the highest prediction accuracy among multiple neighboring reference sample lines of the current block, deriving prediction samples using reference samples located in a prediction direction on the selected line, and signaling the used reference sample line to the image decoding apparatus (200). The above-described case may be referred to as multi-reference line (MRL) intra prediction or MRL-based intra prediction. In addition, the current block may be divided into vertical or horizontal sub-partitions, intra prediction may be performed based on the same intra prediction mode, and neighboring reference samples may be derived and used on a sub-partition basis. That is, in this case, the intra prediction mode for the current block is identically applied to the sub-partitions, but neighboring reference samples are derived and used on a sub-partition basis, thereby improving intra prediction performance in some cases. Such a prediction method may be referred to as intra sub-partitions (ISP) or ISP-based intra prediction. The above-described intra prediction methods may be referred to as intra prediction types in order to be distinguished from the intra prediction modes in Section 1.2. The intra prediction types may be referred to as intra prediction techniques or additional intra prediction modes, or the like. For example, the intra prediction types (or additional intra prediction modes, etc.) may include at least one of the above-described LIP, PDPC, MRL, and ISP. A general intra prediction method excluding specific intra prediction types such as LIP, PDPC, MRL, and ISP may be referred to as a normal intra prediction type. The normal intra prediction type may be generally applied when the specific intra prediction types are not applied, and prediction may be performed based on the above-described intra prediction modes. Meanwhile, post-processing filtering for the derived prediction samples may be performed as necessary.

Specifically, an intra prediction procedure may include an intra prediction mode/type determination step, a neighboring reference sample derivation step, and an intra prediction mode/type-based prediction sample derivation step. In addition, a post-filtering step for the derived prediction samples may be performed as necessary.

Meanwhile, in addition to the above-described intra prediction types, affine linear weighted intra prediction (ALWIP) may be used. The ALWIP may also be referred to as LWIP (linear weighted intra prediction) or MIP (matrix weighted intra prediction or matrix based intra prediction). When the MIP is applied to the current block, prediction samples for the current block may be derived by (i) using neighboring reference samples subjected to an averaging procedure, (ii) performing a matrix-vector-multiplication procedure, and (iii) additionally performing horizontal/vertical interpolation as necessary. Intra prediction modes used for the MIP may be configured differently from intra prediction modes used in the above-described LIP, PDPC, MRL, ISP intra prediction or normal intra prediction. The intra prediction modes for the MIP may be referred to as MIP intra prediction modes, MIP prediction modes, or MIP modes. For example, matrices and offsets used in the matrix-vector-multiplication may be differently set according to the intra prediction modes for the MIP. Here, the matrix may be referred to as a (MIP) weight matrix, and the offset may be referred to as a (MIP) offset vector or a (MIP) bias vector. A detailed MIP method will be described later.

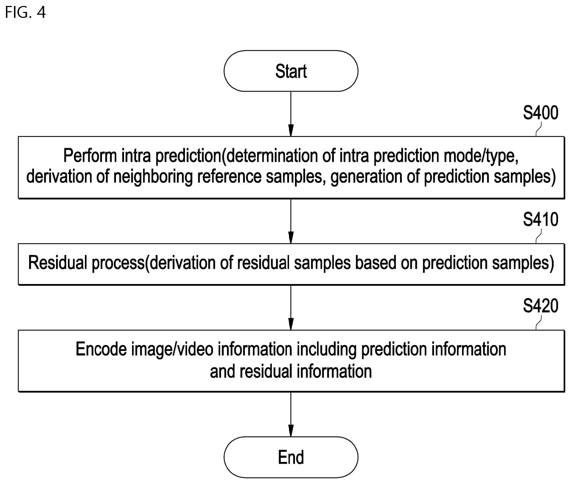

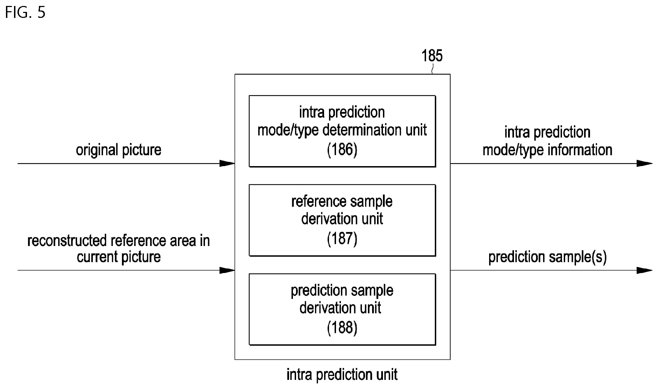

Intra prediction-based block reconstruction procedures and the intra prediction unit (185) in the image encoding apparatus (100) may schematically include, for example, FIGS. 4 and 5.

S400 may be performed by the intra prediction unit (185) of the image encoding apparatus (100), and S410 may be performed by a residual processing unit of the image encoding apparatus (100). Specifically, S410 may be performed by a subtractor (115) of the image encoding apparatus (100). In S420, prediction information may be derived by the intra prediction unit (185) and encoded by an entropy encoding unit (190). In S420, residual information may be derived by the residual processing unit and encoded by the entropy encoding unit (190). The residual information is information on the residual samples. The residual information may include information on quantized transform coefficients for the residual samples. As described above, the residual samples may be derived as transform coefficients through a transform unit (120) of the image encoding apparatus (100), and the transform coefficients may be derived as quantized transform coefficients through a quantization unit (130). Information on the quantized transform coefficients may be encoded by the entropy encoding unit (190) through a residual coding procedure.

The image encoding apparatus (100) performs intra prediction for the current block (S400). The image encoding apparatus (100) may derive an intra prediction mode/type for the current block, derive neighboring reference samples of the current block, and generate prediction samples in the current block based on the intra prediction mode/type and the neighboring reference samples. Here, the intra prediction mode/type determination, neighboring reference sample derivation, and prediction sample generation procedures may be performed simultaneously, or one procedure may be performed before another procedure. For example, the intra prediction unit (185) of the image encoding apparatus (100) may include an intra prediction mode/type determination unit (186), a reference sample derivation unit (187), and a prediction sample derivation unit (188). The intra prediction mode/type determination unit (186) may determine an intra prediction mode/type for the current block, the reference sample derivation unit (187) may derive neighboring reference samples of the current block, and the prediction sample derivation unit (188) may derive prediction samples of the current block. Meanwhile, although not illustrated, when a prediction sample filtering procedure described later is performed, the intra prediction unit (185) may further include a prediction sample filtering unit (not shown). The image encoding apparatus (100) may determine a mode/type applied to the current block among a plurality of intra prediction modes/types. The image encoding apparatus (100) may compare RD costs for the intra prediction modes/types and determine an optimal intra prediction mode/type for the current block.

Meanwhile, the image encoding apparatus (100) may perform a prediction sample filtering procedure. Prediction sample filtering may be referred to as post-filtering. Some or all of the prediction samples may be filtered by the prediction sample filtering procedure. In some cases, the prediction sample filtering procedure may be omitted.

The image encoding apparatus (100) generates residual samples for the current block based on the (filtered) prediction samples (S410). The image encoding apparatus (100) may derive the residual samples by comparing the prediction samples with original samples of the current block on a phase basis.

The image encoding apparatus (100) may encode image information including information on the intra prediction (prediction information) and residual information on the residual samples (S420). The prediction information may include intra prediction mode information and intra prediction type information. The image encoding apparatus (100) may output the encoded image information in the form of a bitstream. The output bitstream may be delivered to the image decoding apparatus (200) through a storage medium or a network.

The residual information may include residual coding syntax described later. The image encoding apparatus (100) may derive quantized transform coefficients by transforming/quantizing the residual samples. The residual information may include information on the quantized transform coefficients.

Meanwhile, as described above, the image encoding apparatus (100) may generate a reconstructed picture (including reconstructed samples and reconstructed blocks). For this purpose, the image encoding apparatus (100) may derive (modified) residual samples by performing inverse quantization/inverse transform on the quantized transform coefficients. The reason for performing inverse quantization/inverse transform again after transform/quantization of the residual samples is to derive the same residual samples as those derived by the image decoding apparatus (200), as described above. The image encoding apparatus (100) may generate a reconstructed block including reconstructed samples for the current block based on the prediction samples and the (modified) residual samples. A reconstructed picture for the current picture may be generated based on the reconstructed block. As described above, an in-loop filtering procedure or the like may be further applied to the reconstructed picture.

Intra prediction-based video/image decoding procedures and the intra prediction unit in the image decoding apparatus (200) may schematically include, for example, the following.

The image decoding apparatus (200) may perform operations corresponding to operations performed by the image encoding apparatus (100).

S600 to S620 may be performed by the intra prediction unit (265) of the image decoding apparatus (200), and prediction information of S600 and residual information of S630 may be obtained from the bitstream by the entropy decoding unit (210) of the image decoding apparatus (200). A residual processing unit of the image decoding apparatus (200) may derive residual samples for the current block based on the residual information. Specifically, the inverse quantization unit (220) of the residual processing unit may derive transform coefficients by performing inverse quantization based on quantized transform coefficients derived from the residual information, and the inverse transform unit (230) of the residual processing unit may derive residual samples for the current block by performing inverse transform on the transform coefficients. S640 may be performed by an adder (235) or a reconstruction unit of the image decoding apparatus (200).

Specifically, the image decoding apparatus (200) may derive an intra prediction mode/type for the current block based on received prediction information (intra prediction mode/type information) (S600). The image decoding apparatus (200) may derive neighboring reference samples of the current block (S610). The image decoding apparatus (200) may generate prediction samples in the current block based on the intra prediction mode/type and the neighboring reference samples (S620). In this case, the image decoding apparatus (200) may perform a prediction sample filtering procedure. Prediction sample filtering may be referred to as post-filtering. Some or all of the prediction samples may be filtered by the prediction sample filtering procedure. In some cases, the prediction sample filtering procedure may be omitted.

The image decoding apparatus (200) may generate residual samples for the current block based on the received residual information. The image decoding apparatus (200) may generate reconstructed samples for the current block based on the prediction samples and the residual samples, and may derive a reconstructed block including the reconstructed samples (S630). A reconstructed picture for the current picture may be generated based on the reconstructed block. As described above, an in-loop filtering procedure or the like may be further applied to the reconstructed picture.

Here, the intra prediction unit (265) of the image decoding apparatus (200) may include an intra prediction mode/type determination unit (266), a reference sample derivation unit (267), and a prediction sample derivation unit (268). The intra prediction mode/type determination unit (266) may determine an intra prediction mode/type for the current block based on intra prediction mode/type information generated and signaled by the intra prediction mode/type determination unit (186) of the image encoding apparatus (100), the reference sample derivation unit (267) may derive neighboring reference samples of the current block, and the prediction sample derivation unit (268) may derive prediction samples of the current block. Meanwhile, although not illustrated, when the above-described prediction sample filtering procedure is performed, the intra prediction unit (265) may further include a prediction sample filtering unit (not shown).

The intra prediction mode information may include, for example, flag information (e.g., intra_luma_mpm_flag) indicating whether an MPM (most probable mode) is applied to the current block or a remaining mode is applied, and when the MPM is applied to the current block, the prediction mode information may further include index information (e.g., intra_luma_mpm_idx) indicating one of intra prediction mode candidates (MPM candidates). The intra prediction mode candidates (MPM candidates) may be configured as an MPM candidate list or an MPM list. In addition, when the MPM is not applied to the current block, the intra prediction mode information may further include remaining mode information (e.g., intra_luma_mpm_remainder) indicating one of remaining intra prediction modes excluding the intra prediction mode candidates (MPM candidates). The image decoding apparatus (200) may determine the intra prediction mode of the current block based on the intra prediction mode information. A separate MPM list may be configured for the above-described MIP.

In addition, the intra prediction type information may be implemented in various forms. For example, the intra prediction type information may include intra prediction type index information indicating one of the intra prediction types. As another example, the intra prediction type information may include at least one of reference sample line information (e.g., intra_luma_ref_idx) indicating whether the MRL is applied to the current block and, when applied, which reference sample line is used, ISP flag information (e.g., intra_subpartitions_mode_flag) indicating whether the ISP is applied to the current block, ISP type information (e.g., intra_subpartitions_split_flag) indicating a split type of sub-partitions when the ISP is applied, flag information indicating whether PDPC is applied, or flag information indicating whether LIP is applied. In addition, the intra prediction type information may include an MIP flag indicating whether the MIP is applied to the current block.

The intra prediction mode information and/or the intra prediction type information may be encoded/decoded through the coding methods described in this document. For example, the intra prediction mode information and/or the intra prediction type information may be encoded/decoded through entropy coding (e.g., CABAC, CAVLC) based on a truncated (Rice) binary code.

### Intra prediction mode/type determination

When intra prediction is applied, an intra prediction mode applied to a current block may be determined by using intra prediction modes of neighboring blocks. For example, an image decoding apparatus (200) may select one of MPM candidates in an MPM (most probable mode) list derived based on intra prediction modes of neighboring blocks (e.g., left and/or top neighboring blocks) of the current block and additional candidate modes, based on a received MPM index, or may select one of remaining intra prediction modes not included in the MPM candidates (and a planar mode) based on remaining intra prediction mode information. The MPM list may be constructed to include the planar mode as a candidate or not to include the planar mode as a candidate. For example, when the MPM list includes the planar mode as a candidate, the MPM list may have six candidates, and when the MPM list does not include the planar mode as a candidate, the MPM list may have three candidates. When the MPM list is constructed not to include the planar mode as a candidate, a not planar flag (e.g., intra_luma_not_planar_flag) indicating whether the intra prediction mode of the current block is not a planar mode may be signaled. For example, an MPM flag may be signaled first, and an MPM index and a not planar flag may be signaled when a value of the MPM flag is 1. In addition, the MPM index may be signaled when a value of the not planar flag is 1. Here, configuring the MPM list not to include the planar mode as a candidate is not because the planar mode is not an MPM, but rather because the planar mode is always considered as an MPM, and thus the not planar flag is signaled first to check whether the mode is the planar mode.

For example, whether the intra prediction mode applied to the current block is included in the MPM candidates (and the planar mode) or is included in remaining modes may be indicated based on an MPM flag (e.g., intra_luma_mpm_flag). A value 1 of the MPM flag may indicate that the intra prediction mode for the current block is included in the MPM candidates (and the planar mode), and a value 0 of the MPM flag may indicate that the intra prediction mode for the current block is not included in the MPM candidates (and the planar mode). A value 0 of the not planar flag (e.g., intra_luma_not_planar_flag) may indicate that the intra prediction mode for the current block is the planar mode, and a value 1 of the not planar flag may indicate that the intra prediction mode for the current block is not the planar mode. The MPM index may be signaled in a form of an mpm_idx or intra_luma_mpm_idx syntax element, and the remaining intra prediction mode information may be signaled in a form of a rem_intra_luma_pred_mode or intra_luma_mpm_remainder syntax element. For example, the remaining intra prediction mode information may indicate one of remaining intra prediction modes not included in the MPM candidates (and the planar mode) by indexing the remaining intra prediction modes among all intra prediction modes in an order of prediction mode numbers. The intra prediction mode may be an intra prediction mode for a luma component (sample). Hereinafter, the intra prediction mode information may include at least one of the MPM flag (e.g., intra_luma_mpm_flag), the not planar flag (e.g., intra_luma_not_planar_flag), the MPM index (e.g., mpm_idx or intra_luma_mpm_idx), and the remaining intra prediction mode information (rem_intra_luma_pred_mode or intra_luma_mpm_remainder). In this document, the MPM list may be referred to by various terms such as an MPM candidate list, candModeList, and the like. When MIP is applied to the current block, a separate MPM flag for MIP (e.g., intra_mip_mpm_flag), an MPM index (e.g., intra_mip_mpm_idx), and remaining intra prediction mode information (e.g., intra_mip_mpm_remainder) may be signaled, and the not planar flag is not signaled.

An intra prediction mode signaling procedure in the image encoding apparatus (100) and an intra prediction mode determination procedure in the image decoding apparatus (200) may be performed as follows, for example.

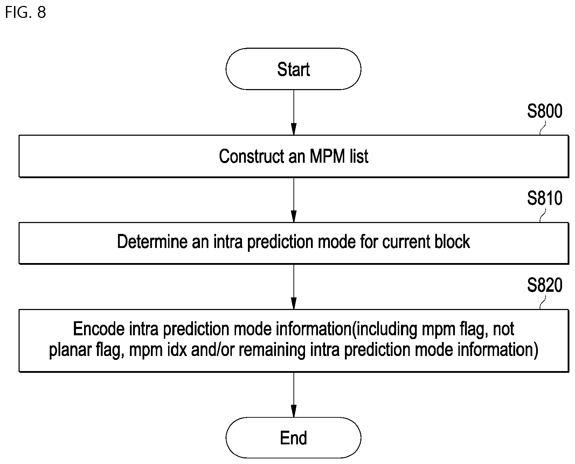

Referring to FIG. 8, the image encoding apparatus (100) constructs an MPM list for the current block (S800). The MPM list may include candidate intra prediction modes (MPM candidates) having a high possibility of being applied to the current block. The MPM list may include intra prediction modes of neighboring blocks, and may further include specific intra prediction modes according to a predefined method. A detailed method of constructing the MPM list will be described later.

The image encoding apparatus (100) determines an intra prediction mode of the current block (S810). The image encoding apparatus (100) may perform prediction based on various intra prediction modes, and may determine an optimal intra prediction mode based on RDO (rate-distortion optimization) based thereon. In this case, the image encoding apparatus (100) may determine the optimal intra prediction mode by using only the MPM candidates constructed in the MPM list and the planar mode, or may determine the optimal intra prediction mode by further using remaining intra prediction modes in addition to the MPM candidates constructed in the MPM list and the planar mode. Specifically, for example, when an intra prediction type of the current block is a specific type other than a normal intra prediction type (for example, LIP, MRL, or ISP), the image encoding apparatus (100) may determine the optimal intra prediction mode by considering only the MPM candidates and the planar mode as intra prediction mode candidates for the current block. That is, in this case, the intra prediction mode for the current block may be determined only among the MPM candidates and the planar mode, and in this case, the MPM flag may not be encoded/signaled. The image decoding apparatus (200) may estimate that the MPM flag has a value of 1 without separately receiving signaling of the MPM flag.

Meanwhile, in general, when the intra prediction mode of the current block is not the planar mode and is one of the MPM candidates in the MPM list, the image encoding apparatus (100) generates an MPM index (mpm idx) indicating one of the MPM candidates. When the intra prediction mode of the current block is not included in the MPM list, remaining intra prediction mode information indicating a mode identical to the intra prediction mode of the current block among remaining intra prediction modes not included in the MPM list (and the planar mode) is generated.

The image encoding apparatus (100) may encode the intra prediction mode information and output the same in a form of a bitstream. The intra prediction mode information may include the above-described MPM flag, not planar flag, MPM index, and/or remaining intra prediction mode information. In general, the MPM index and the remaining intra prediction mode information are in an alternative relationship in indicating an intra prediction mode for one block, and thus are not signaled simultaneously. That is, an MPM flag value of 1 and a not planar flag or an MPM index are signaled together, or an MPM flag value of 0 and remaining intra prediction mode information are signaled together. However, as described above, when a specific intra prediction type is applied to the current block, the MPM flag may not be signaled and only the not planar flag and/or the MPM index may be signaled. That is, in this case, the intra prediction mode information may include only the not planar flag and/or the MPM index.

The image decoding apparatus (200) may determine an intra prediction mode corresponding to the intra prediction mode information determined and signaled by the image encoding apparatus (100).

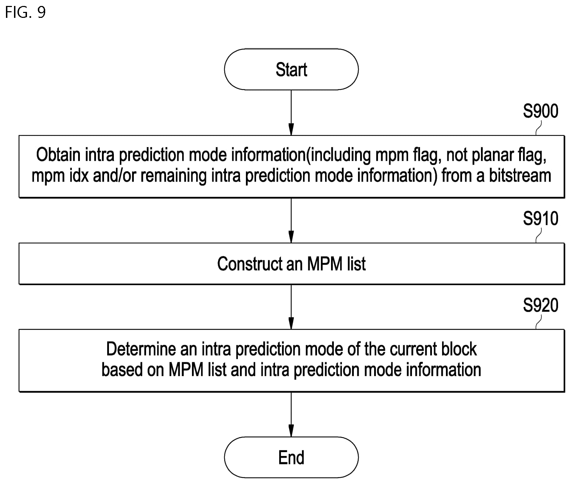

Referring to FIG. 9, the image decoding apparatus (200) obtains intra prediction mode information from a bitstream (S900). The intra prediction mode information may include at least one of an MPM flag, a not planar flag, an MPM index, and remaining intra prediction mode information as described above.

The image decoding apparatus (200) constructs an MPM list (S910). The MPM list is constructed identically to the MPM list constructed in The image encoding apparatus (100). That is, the MPM list may include intra prediction modes of neighboring blocks, and may further include specific intra prediction modes according to a predefined method. A detailed method of constructing the MPM list will be described later.

Although S910 is illustrated as being performed after S900, this is merely an example, and S910 may be performed before S900 or may be performed simultaneously.

The image decoding apparatus (200) determines an intra prediction mode of the current block based on the MPM list and the intra prediction mode information (S920). For example, when a value of the MPM flag is 1, The image decoding apparatus (200) may derive the planar mode as the intra prediction mode of the current block (based on the not planar flag), or may derive a candidate indicated by the MPM index among the MPM candidates in the MPM list as the intra prediction mode of the current block. As another example, when a value of the MPM flag is 0, The image decoding apparatus (200) may derive an intra prediction mode indicated by the remaining intra prediction mode information among remaining intra prediction modes not included in the MPM list and the planar mode as the intra prediction mode of the current block. Meanwhile, as yet another example, when an intra prediction type of the current block is a specific type (e.g., LIP, MRL, or ISP), The image decoding apparatus (200) may derive the planar mode or a candidate indicated by the MPM index within the MPM list as the intra prediction mode of the current block without checking the MPM flag.

In general, when a block partition is performed for an image, a current block to be coded and neighboring blocks have similar image characteristics. Accordingly, the current block and neighboring blocks have a high probability of having identical or similar intra prediction modes. Therefore, an encoder may use intra prediction modes of neighboring blocks to encode an intra prediction mode of the current block.

For example, The image encoding apparatus (100)/The image decoding apparatus (200) may construct an MPM (most probable modes) list for the current block. The MPM list may also be referred to as an MPM candidate list. Here, MPM may refer to a mode used to improve coding efficiency by considering similarity between a current block and neighboring blocks when coding an intra prediction mode. As described above, the MPM list may be constructed to include the planar mode, or may be constructed to exclude the planar mode. For example, when the MPM list includes the planar mode, a number of candidates in the MPM list may be six. When the MPM list does not include the planar mode, a number of candidates in the MPM list may be five.

The image encoding apparatus (100)/The image decoding apparatus (200) may construct an MPM list including six MPMs.

In order to construct the MPM list, modes of the following types may be considered.

- Default intra modes
- Neighbour intra modes
- Intra modes derived from neighbouring inter modes (IPM modes)
- DIMD (Decoder-side intra mode derivation) modes
- Derived intra modes

For the neighboring intra modes, neighboring blocks, that is, a left neighboring block, a top neighboring block, a bottom-left neighboring block, a top-right neighboring block, a top-left neighboring block, and the like may be considered. When neighboring intra modes are used as MPMs, an input order may vary depending on size information of the current block. For example, when a height of a block is greater than or equal to a width of the block, an intra mode of a top neighboring block may be considered first, and then an intra mode of a left neighboring block may be considered.

Even when a neighboring block is coded in an inter mode rather than an intra mode, intra mode information may be obtained by an IPM buffer. When a position indicated by a motion vector of a neighboring inter block is an intra mode, the corresponding intra mode may be stored in the IPM buffer. An intra mode stored in the IPM buffer may be used as an MPM mode of a neighboring block.

An MPM candidate configuration may be performed from DIMD described later. When the current block is not a DIMD mode, an intra mode derived from DIMD may be used as an MPM candidate.

As described above, when the MPM list is constructed not to include the planar mode, the planar mode is excluded from the list, and a number of candidates in the MPM list may be set to five.

**Intra prediction mode/type-based prediction sample derivation**

A prediction unit of an image encoding apparatus (100)/an image decoding apparatus (200) may derive, among neighboring reference samples of a current block, reference samples according to an intra prediction mode of the current block, and may generate prediction samples of the current block based on the reference samples.

For example, prediction samples may be derived based on an average or interpolation of neighboring reference samples of the current block, or prediction samples may be derived based on reference samples existing in a specific prediction direction with respect to the prediction samples among the neighboring reference samples of the current block. The case of (i) may be referred to as a non-directional mode or a non-angular mode, and the case of (ii) may be referred to as a directional mode or an angular mode. In addition, prediction samples may be generated through interpolation between a second neighboring sample located in a direction opposite to a prediction direction of the intra prediction mode of the current block with respect to prediction samples of the current block and a first neighboring sample. The above-described case may be referred to as Linear interpolation intra prediction, LIP. In addition, temporary prediction samples of the current block may be derived based on filtered neighboring reference samples, and prediction samples of the current block may be derived by performing a weighted sum of at least one reference sample derived according to the intra prediction mode among existing neighboring reference samples, that is, unfiltered neighboring reference samples, and the temporary prediction samples. The above-described case may be referred to as PDPC, Position dependent intra prediction. In addition, intra prediction coding may be performed by selecting, among multiple neighboring reference sample lines of the current block, a reference sample line having the highest prediction accuracy, deriving prediction samples using reference samples located in a prediction direction from the corresponding line, and signaling the used reference sample line to a decoding apparatus. The above-described case may be referred to as multi-reference line intra prediction, MRL, or MRL-based intra prediction. In addition, the current block may be divided into vertical or horizontal sub-partitions, and intra prediction may be performed based on the same intra prediction mode, while neighboring reference samples may be derived and used on a sub-partition basis. That is, in this case, the intra prediction mode for the current block is applied identically to the sub-partitions, but neighboring reference samples are derived and used on a sub-partition basis, thereby increasing intra prediction performance in some cases. Such a prediction method may be referred to as intra sub-partitions, IPS, or IPS-based intra prediction. In addition, when a prediction direction with respect to prediction samples points between neighboring reference samples, that is, when the prediction direction points to a fractional sample position, a value of a prediction sample may be derived through interpolation of a plurality of reference samples located around the corresponding prediction direction.

The above-described intra prediction methods may be referred to as intra prediction types, distinguished from the intra prediction modes described above. The intra prediction types may also be referred to by various terms such as intra prediction techniques or additional intra prediction modes. For example, the intra prediction types, or additional intra prediction modes, may include at least one of the above-described LIP, PDPC, MRL, and ISP. Information on the intra prediction types may be encoded in The image encoding apparatus (100), included in a bitstream, and signaled to The image decoding apparatus (200). The information on the intra prediction types may be implemented in various forms, such as flag information indicating whether each intra prediction type is applied or index information indicating one of a plurality of intra prediction types.

An MPM list for deriving the above-described intra prediction modes may be constructed differently according to the intra prediction type. Alternatively, the MPM list may be commonly constructed regardless of the intra prediction type.

### Decoder-side intra mode derivation (DIMD)

A DIMD mode may be used by being derived in an image encoding apparatus (100) and an image decoding apparatus (200) without directly transmitting intra prediction mode information. First, a horizontal gradient and a vertical gradient may be obtained from a second neighboring sample column and row, and a HoG (Histogram of gradients) may be constructed therefrom.

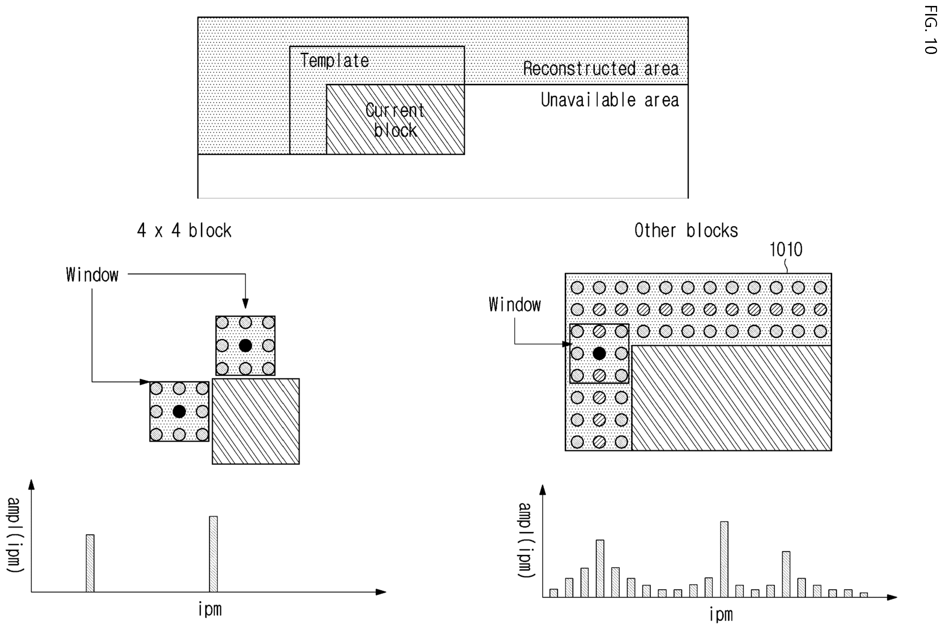

The HoG may be constructed as shown in FIG. 10. The HoG may be obtained by applying a sobel filter using L-shaped rows and columns of three pixels around the current block. When boundaries of blocks exist in different CTUs, the HoG is not used for texture analysis.

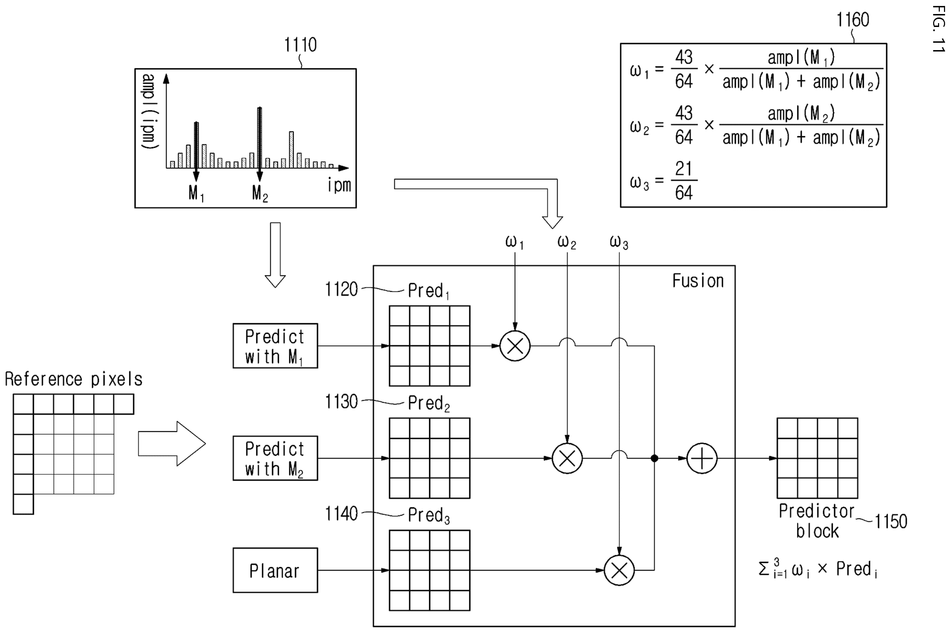

Thereafter, as shown in FIG. 11, two intra modes having the largest histogram amplitudes may be selected, and a final prediction block may be constructed by blending a prediction block predicted using these modes and a planar mode. Weights may be derived from amplitudes of the histogram. In addition, a DIMD flag may be transmitted on a block basis to check whether DIMD is used.

### Intra template matching prediction (IntraTMP)

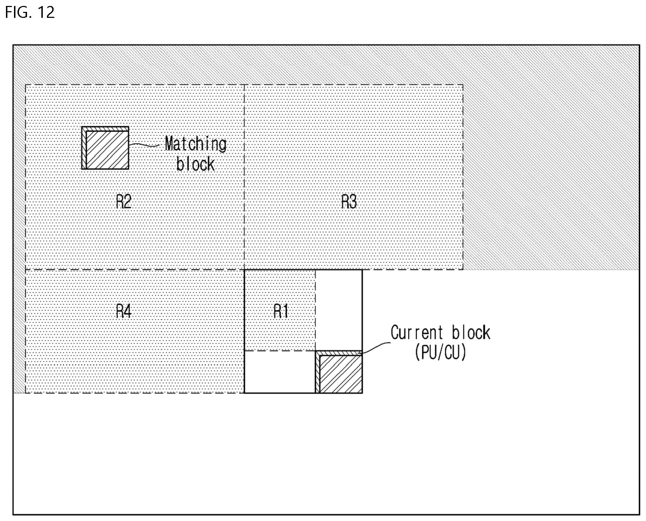

Intra template matching prediction (IntraTMP) is a special intra prediction mode in which an optimal prediction block is copied (derived) from a reconstructed portion within a current frame in which an L-shaped template matches a current template. For a predetermined search area, an image encoding apparatus (100) may search, in a reconstructed portion of the current frame, for a template most similar to the current template, and may use a corresponding block (a matching block of FIG. 12) as a prediction block. The image encoding apparatus (100) may transmit use of IntraTMP, and the same prediction operation may be performed at an image decoding apparatus (200).

A prediction signal may be generated by matching an L-shaped causal neighbor of a current block with another block in a predefined search area as shown in FIG. 12. In FIG. 12, R1 represents a current CTU, R2 represents a top-left CTU, R3 represents an above CTU, and R4 represents a left CTU.

SAD (sum of absolute differences) may be used as a cost function. Within each area, The image decoding apparatus (200) may search, for the current block, for a template having a smallest SAD, and may use a block corresponding to the searched template as a prediction block.

An error may be referred to as a cost (cost), an error (error), a difference (difference), a template cost (template cost), or the like. That is, in the present disclosure, "error", "cost", "error", "difference", "template cost", and the like may have the same meaning. The error may be derived based on at least one of SAD (sum of difference), SATD (sum of transformed difference), SSE (sum of squared error), MR-SAD (mean-removed sum of difference), MR-SSE (mean-removed sum of squared error), and MR-SATD (mean-removed sum of transformed difference).

Sizes of all search areas (SearchRange_w, SearchRange_h) may be set in proportion to a block size (BlkW, BlkH) so as to have a fixed number of SAD comparisons per pixel. That is, sizes of all search areas may be set as shown in Equation 1.

[Equation 1]

$$SearchRange_w = a * BlkW$$

$$SearchRange_h = a * BlkH$$

In Equation 1, $\alpha$ is a constant controlling a trade-off between gain and complexity. For example, $\alpha$ may be equal to 5.

In order to increase a speed of a template matching process, search ranges of all search areas may be sub-sampled by a factor of 2. In this case, a template matching search may be reduced by a factor of 4. After an optimal match is found, a refinement process may be performed. The refinement process may be performed through a second template matching search around the optimal match with a reduced range. The reduced range may be defined as min(BlkW, BlkH)/2.

An intra template matching tool may be enabled for CUs having a size with a width and a height less than or equal to 64. A maximum CU size for intra template matching may be variable.

An intra template matching prediction mode may be signaled at a CU level through a dedicated flag when DIMD (decoder-side intra mode derivation) is not used for a current CU. Here, the dedicated flag may indicate whether the intra template matching prediction mode is applied.

### IntraTMP derived block vector candidates for IBC

A block vector derived from intra template matching prediction (IntraTMP BV) may be used for IBC. Stored IntraTMP BVs of neighboring blocks may be used as spatial BV candidates in construction of an IBC candidate list together with IBC BVs.

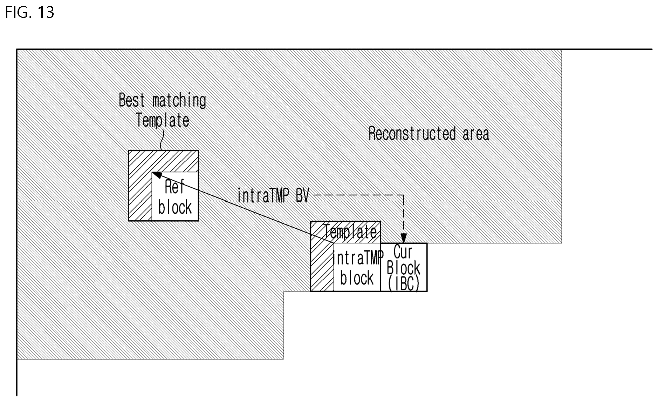

The IntraTMP BV may be stored in a block vector buffer of IBC. As shown in FIG. 13, a current IBC block may use both IBC BVs and IntraTMP BVs of neighboring blocks as BV candidates for an IBC BV candidate list.

IntraTMP BVs may be added as spatial candidates to the IBC BV candidate list.

### Intra block copy (IBC)

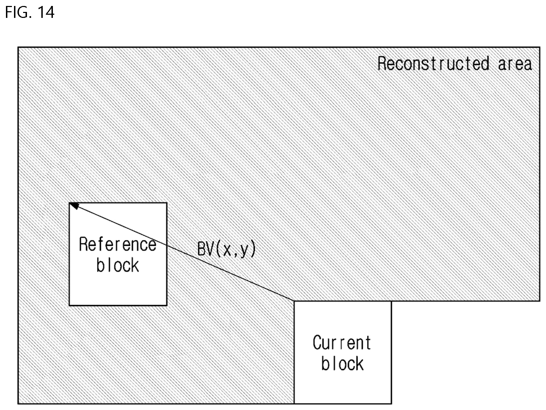

Referring to FIG. 14, in an IBC mode, block matching between a current block and a reference block is performed to find an optimal block vector (BV, Block vector). In addition, the IBC mode may manage a plurality of block vector candidates in a candidate list. One of the block vector candidates constructed in the candidate list may be signaled, and block vector information may be signaled.

A block vector is used to represent a displacement from a current block to a reference block already reconstructed in a current picture.

**Spatial geometric partitioning mode (SGPM)**

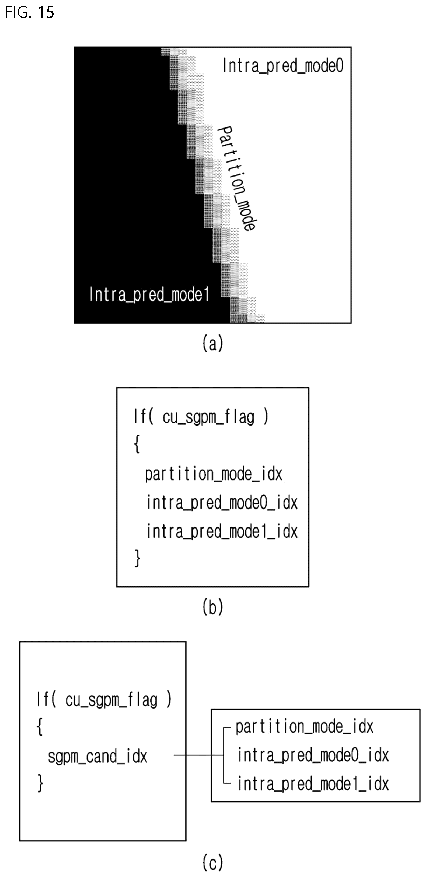

Similar to inter GPM, SGPM is composed of one partition mode (partition_mode) and two associated intra prediction modes (intra_pred_mode0, intra_pred_mode1). As shown in FIG. 15(b), when these modes are directly signaled in a bitstream, very large overhead bits may be generated. In order to more efficiently represent essential partitioning and prediction information in the bitstream, as shown in FIG. 15(c), a candidate list is applied, and only a candidate index (sgpm_cand_idx) is signaled in the bitstream.

Block size constraints for SGPM may be as follows: 4≤width≤64, 4≤height≤64, width<height8, height<width8, width*height≥32. That is, SGPM may also be applied to 4x8, 8x4, 4x16, and 16x4 blocks.

In SGPM, adaptive blending is enabled. Assuming that an original blending width of VVC and ECM is τ, adaptive SGPM blending may be described as follows.

- When min(width, height)==4, 1/2*τ is selected.
- Otherwise, when min(width, height)==8, τ is selected.
- Otherwise, when min(width, height)==16, 2*τ is selected.
- Otherwise, when min(width, height)==32, 4*τ is selected.
- Otherwise, 8*τ is selected.

In SGPM, 26 predefined partition modes among 64 partition modes are used.

For each partition mode, an IPM list (candidate list) for each partition is derived. A size of the IPM list is 3. A method of deriving the IPM list reuses a method introduced by inter-intra GPM, and one difference is that TIMD derivation is excluded.

A template size is set to be equal to 1. That is, a height of a top template part is 1, and a width of a left template part is 1.

Possible combinations between one partition mode and two intra prediction modes are ranked in ascending order based on SAD between prediction and reconstruction of a template. A weight of the template is 1 or 0 depending on the partition mode. A length of a candidate list of combinations is set to be equal to 16.

Intra prediction modes derived from TIMD (horizontal modes and vertical modes) are added to the IPM list and placed at a first position. The size of the IPM list is maintained as 3.

**Template-based multiple reference line intra prediction (TMRL)**

A TMRL mode combines a reference line and a prediction mode together and constructs a list of candidate combinations by using a template matching method. An index for the candidate combination list is coded to indicate which reference line and prediction mode are used when coding a current block. A regular multiple reference line (multiple reference line, MRL) for a non-TIMD part is replaced with the TMRL mode.

The TMRL mode extends a reference line candidate list and an intra prediction mode candidate list. An extended reference line candidate list is {1, 3, 5, 7, 12}. A constraint on a top CTU row remains unchanged. A size of the intra prediction mode candidate list is 10. A construction of the intra prediction mode candidate list is similar to MPM, but differs in that a planar mode is excluded from the intra prediction mode candidate list, a DC mode is added after modes of five neighboring PUs and DIMD modes when the DC mode is not included, and angular modes having delta angles of ±1 to ±4 are added compared to angular modes present in the intra prediction mode candidate list. Accuracy of angular prediction is extended from 65 to 129. Additionally, non-adjacent positions are added as candidates for construction of the intra candidate list. When neighboring and non-adjacent blocks are coded in SGPM or GPM modes, intra modes of the blocks are replaced by partition angles.

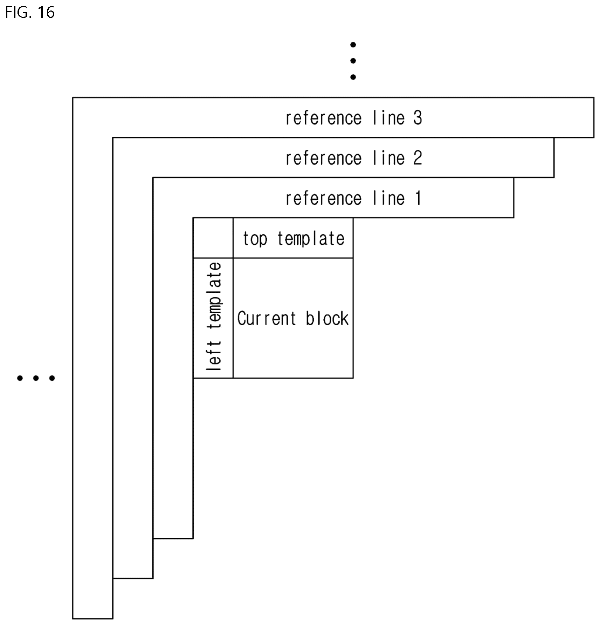

TMRL candidates are constructed as follows. There are 5×10=50 combinations of extended reference lines and allowed intra prediction modes for a block. Since the extended reference lines start from reference line 1, an area covered by reference line 0 is used for template matching. As shown in FIG. 16, SAD errors for a template area are calculated between predictions generated by the 50 combinations and reconstructions. Twenty combinations having minimum SAD errors are selected in ascending order to construct a TMRL candidate list.

For TMRL signaling, instead of directly coding a reference line and an intra mode, an index for the TMRL candidate list is coded to indicate a combination of a reference line and a prediction mode used for coding of a current block.

**Derivation of prediction samples for a chroma component**

When intra prediction is performed for a current block, prediction for a luma component block (luma block) of the current block and prediction for a chroma component block (chroma block) may be performed, and in this case, an intra prediction mode for the chroma component (chroma block) may be set independently from an intra prediction mode for the luma component (luma block).

For example, an intra prediction mode for the chroma component may be indicated based on intra chroma prediction mode information, and the intra chroma prediction mode information may be signaled in a form of an intra_chroma_pred_mode syntax element. As an example, the intra chroma prediction mode information may indicate one of candidate modes including at least one of a planar mode, a DC mode, a vertical mode, a horizontal mode, a DM (Derived Mode), an L_CCLM (cross-component linear model), a T_CCLM, and an LT_CCLM mode. The DM may also be referred to as a direct mode. The CCLM may be referred to as an LM.

Meanwhile, the DM and the CCLM are dependent intra prediction modes that predict a chroma block by using information of a luma block. The DM may indicate a mode in which the same intra prediction mode as the intra prediction mode for the luma component is applied as the intra prediction mode for the chroma component. In addition, the CCLM may indicate an intra prediction mode in which, in a process of generating a prediction block for a chroma block, reconstructed samples of a luma block are sub-sampled, samples derived by applying CCLM parameters $\alpha$ and $\beta$ to the sub-sampled samples are used as prediction samples of the chroma block.

**Direct Block Vector (DBV) for chroma blocks**

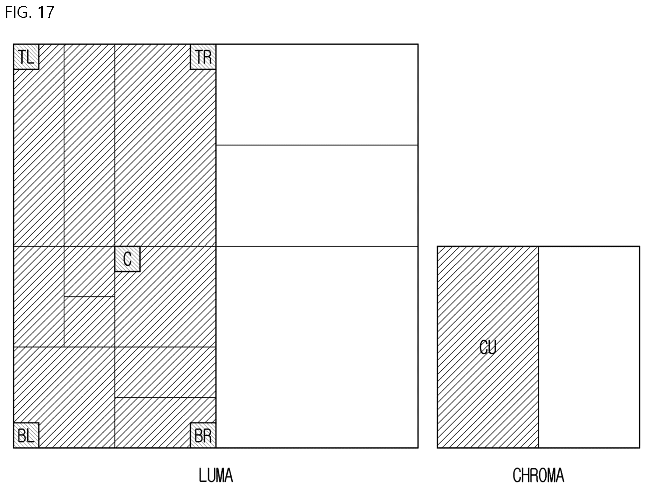

DBV is used for chroma blocks within dual-tree slices. A chroma dual tree is enabled, and a flag is signaled to indicate whether a chroma block is coded by using an IBC mode. When one of luma blocks at five positions shown in FIG. 17 is coded by IBC or IntraTMP, a block vector of the corresponding luma block is scaled and used as a block vector of the chroma block. Template matching is used to perform block vector scaling.

Hereinafter, the present application will be described. The present application relates to intra prediction, and relates to an efficient intra mode coding method. According to embodiments proposed through the present application, candidates of SGPM may be effectively constructed, and through this, block vectors may be utilized. Accordingly, according to the present application, prediction blocks may be generated in various manners, and prediction performance may be improved.

**Problems of the related art**

As described above, in SGPM, a list may be constructed with candidates for combinations of partition information (partition_mode_idx, information indicating a partition mode of SGPM), an intra mode of partition 0 (intra_pred_mode0_idx, information indicating an intra prediction mode of partition 0), and an intra mode of partition 1 (intra_pred_mode1_idx, information indicating an intra prediction mode of partition 1). In addition, in SGPM, an index (sgpm_cand_idx) indicating one of these candidates may be signaled, and a prediction block may be generated based on a candidate indicated by the index sgpm_cand_idx.

However, in conventional SGPM, a candidate list is constructed only with combinations of a planar mode, a DC mode, and directional modes (directional intra prediction modes from 2 to 67) for each partition, and combinations of IntraTMP or IBC are not considered. That is, in conventional SGPM, combinations of IntraTMP or IBC (a block vector of IntraTMP or a block vector of IBC) are not included in the candidate list.

**Embodiments**

The present application proposes embodiments in which a candidate list is constructed by considering combinations of IntraTMP or IBC. In addition, the present application proposes various embodiments for constructing candidates of SGPM. Furthermore, the present application proposes various embodiments that utilize candidates of SGPM (block vectors of the candidates). According to embodiments proposed through the present application, coding efficiency may be improved. The embodiments described below may be performed independently, or two or more of the embodiments may be combined and performed together. Hereinafter, "IntraTMP" is referred to as an "IntraTMP mode", and "IBC" is referred to as an "IBC prediction mode".

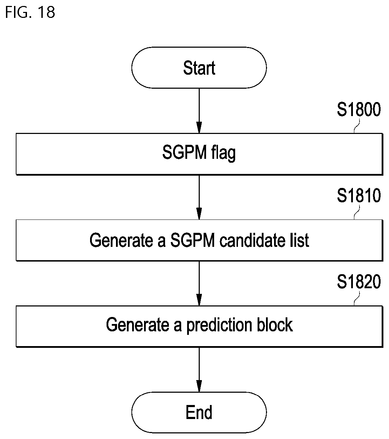

An example of an operation of SGPM proposed through the present application is illustrated in FIG. 18. Steps of FIG. 18 may be performed in an image encoding apparatus (100) and an image decoding apparatus (200).

Referring to FIG. 18, in step S1800, The image encoding apparatus (100) encodes information (SGPM flag) indicating whether SGPM is performed, and The image decoding apparatus (200) may decode the SGPM information (SGPM flag). When a value of the SGPM flag is true, SGPM may be performed.

Step S1810 corresponds to a step of constructing a candidate list of SGPM (SGPM candidate list). That is, step S1810 corresponds to a step of constructing a candidate list for SGPM. A combination of a partition mode candidate partition_mode_idx, an intra mode candidate of partition 0 intra_pred_mode0_idx, and an intra mode candidate of partition 1 intra_pred_mode1_idx may be included in the candidate list as one candidate. The partition mode candidate may be referred to as a partition mode, and the intra mode candidate may be referred to as a prediction mode. Each of partition_mode_idx, intra_pred_mode0_idx, and intra_pred_mode1_idx may have various values. For example, a number of block partitioning methods (partition mode candidates) may be 26. That is, partition_mode_idx may be a value representing 26 partitioning methods. In addition, intra mode candidates of intra_pred_mode0_idx and intra_pred_mode1_idx may each be three. This is merely an example and may vary according to an agreement between The image encoding apparatus (100) and The image decoding apparatus (200).

Among candidates included in the SGPM candidate list, a prediction mode of a certain candidate (a first candidate) may be determined based on an IntraTMP mode or an IBC prediction mode at a reference position referenced to derive a prediction mode. For example, an IntraTMP mode or an IBC prediction mode at the reference position may be determined as a prediction mode of the first candidate, or a block vector of the IntraTMP mode or the IBC prediction mode at the reference position may be determined as a prediction mode of the first candidate. As another example, information indicating the IntraTMP mode or the IBC prediction mode at the reference position may be determined as a prediction mode of the first candidate. When an intra prediction type at the reference position is an IntraTMP mode or an IBC prediction mode, the IntraTMP mode or the IBC prediction mode at the reference position (or a block vector of the IntraTMP mode or the IBC prediction mode, or information indicating the IntraTMP mode or the IBC prediction mode) may be determined as the prediction mode of the first candidate. The reference position may be a reference block.

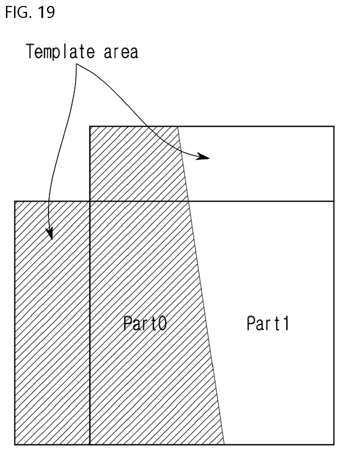

A size of the SGPM candidate list may be defined by an agreement between The image encoding apparatus (100) and The image decoding apparatus (200). For example, the size of the SGPM candidate list may be 16. Since the size of the SGPM candidate list may be limited, not all combinations of partition_mode_idx, intra_pred_mode0_idx, and intra_pred_mode1_idx may be included in the SGPM candidate list. For example, partition_mode_idx may represent 26 partitioning methods, and intra_pred_mode0_idx and intra_pred_mode1_idx may each represent three intra mode candidates, so 2633=234 combinations may be generated. Accordingly, including all candidates in the SGPM candidate list may be inefficient in terms of signaling. Therefore, for all or predefined combinations, as illustrated in FIG. 19, an error between values of SGPM prediction samples within a template region of a current block and values of already reconstructed samples may be obtained, combinations may be sorted in an order of increasing error, and 16 combinations having smaller errors may be included in the SGPM candidate list.

The error may be calculated through error calculation methods such as SAD (sum of difference), SATD (sum of transformed difference), SSE (sum of squared error), MR-SAD (mean-removed sum of difference), MR-SSE (mean-removed sum of squared error), and MR-SATD (mean-removed sum of transformed difference).

The template region may be defined by an agreement between The image encoding apparatus (100) and The image decoding apparatus (200). For example, when a width and a height of the current block are W and H, respectively, a top template region of the current block may be defined as an mxW region, and a left template region of the current block may be defined as an nxH region. Here, m and n may be arbitrary numbers equal to or greater than 1.

Step S1820 corresponds to a step of generating a prediction block. That is, step S1820 corresponds to a step of predicting the current block based on one candidate in the SGPM candidate list. In step S1820, one of the candidates in the SGPM candidate list is selected, and a prediction block may be generated based thereon. In selecting one candidate from the SGPM candidate list, index information (sgpm_cand_idx) may be signaled, thereby indicating which candidate is used for generating the prediction block. According to embodiments, without signaling index information, one candidate for SGPM may be known by an agreement between The image encoding apparatus (100) and The image decoding apparatus (200). For example, without separate signaling, a candidate corresponding to a first index of the SGPM candidate list may be selected.

### Embodiment 1

Embodiment 1 relates to a method of constructing candidates of SGPM. Through Embodiment 1, various methods for obtaining intra mode candidates (intra_pred_mode0_idx or intra_pred_mode1_idx) in step S1810 are proposed. Here, the intra mode candidates may be prediction modes for intra prediction modes of respective partitions divided by a partition mode of SGPM.

According to one embodiment, intra mode candidates of each partition may vary depending on a partitioning direction of a block. That is, among candidates in the SGPM candidate list, a prediction mode of one candidate (a second candidate) may be determined based on a partitioning direction indicated by a partition mode of the second candidate. In SGPM, as a block is partitioned, the block may be divided into two partitions, and each partition may derive intra mode candidates from reference blocks (reference positions) close to each partition. Accordingly, intra mode candidates may vary depending on the partitioning direction of the block.

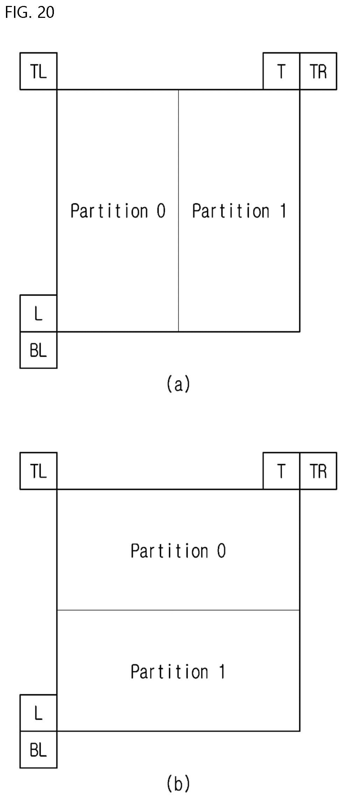

For example, as illustrated in FIG. 20(a), when a left side of a vertical partition is partition 0 and a right side of the vertical partition is partition 1, partition 0 may determine intra mode candidates by referring to reference positions close to partition 0, such as TL (top-left), L (left), and BL (bottom-left), and partition 1 may determine intra prediction candidates by referring to reference positions close to partition 1, such as T (top) and TL (top-left). As another example, as illustrated in FIG. 20(b), when a top side of a horizontal partition is partition 0 and a bottom side of the horizontal partition is partition 1, partition 0 may determine intra mode candidates by referring to reference positions close to partition 0, such as TL, T, and TR, and partition 1 may determine intra mode candidates by referring to reference positions close to partition 1, such as L and BL. In the example of FIG. 20, reference positions TL, T, TR, L, and BL are merely examples, and reference positions may be differently defined by an agreement between The image encoding apparatus (100) and The image decoding apparatus (200).

According to one embodiment, an intra mode at a specific position (a specific reference position) may be included as a candidate for each partition regardless of the partitioning direction of the block. That is, a prediction mode of the second candidate may be determined as an intra prediction mode at a predetermined reference position regardless of the partitioning direction indicated by the partition mode of the second candidate. The specific position or the predetermined reference position may be defined by an agreement between The image encoding apparatus (100) and The image decoding apparatus (200). For example, an intra prediction mode at a TL position of the current block may be included as a candidate for each partition regardless of the partitioning direction of the block.

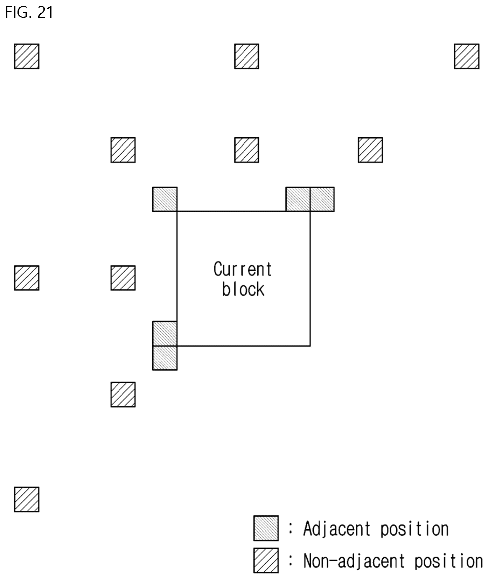

According to one embodiment, an intra prediction mode stored at a reference position adjacent to the current block or at a reference position not adjacent to the current block may be included as an intra mode candidate of each partition. That is, among candidates in the SGPM candidate list, a prediction mode of one candidate (the second candidate) may be determined as an intra prediction mode stored at a reference position adjacent to the current block or at a reference position not adjacent to the current block. For example, as illustrated in FIG. 21, an intra mode candidate may be an intra mode stored at an adjacent position or at a non-adjacent position. In addition, intra mode candidates of each partition may vary depending on the partitioning direction. That is, intra mode candidates may be included by referring to reference positions close to each partition. In addition, intra mode candidates of each partition may be included regardless of the partitioning direction. In addition, a method of including intra mode candidates may vary depending on whether a reference position is adjacent or non-adjacent. For example, for adjacent reference positions, intra modes of different reference positions according to the partitioning direction may be included as intra mode candidates of respective partitions, and for non-adjacent reference positions, intra modes of the same reference position may be included as intra mode candidates of respective partitions regardless of the partitioning direction.

The intra mode candidates may be a planar mode, a DC mode, or directional modes from 2 to 66. In addition, the intra mode candidates may be an IBC prediction mode or an IntraTMP mode. When an intra mode stored at a reference position is an IBC prediction mode or an IntraTMP mode, a prediction block may be generated by using block vector information stored at the reference position. That is, prediction samples may be generated by using already reconstructed samples at a position indicated by the stored block vector.

In FIG. 21, when a top-left coordinate of the current block is (x, y), and a width and a height of the current block are W and H, respectively, adjacent reference positions may be (x-1, y-1), (x+W-1, y-1), (x+W, y-1), (x-1, y+H), and (x-1, y+H-1). However, this is merely an example, and other adjacent positions may be defined by an agreement between The image encoding apparatus (100) and The image decoding apparatus (200). When a top-left coordinate of the current block is (x, y), and a width and a height of the current block are W and H, respectively, non-adjacent reference positions may be represented as NonAdj_pos of a combination of Table 1 to Table 3. However, this is merely an example, and other non-adjacent positions may be defined by an agreement between The image encoding apparatus (100) and The image decoding apparatus (200).

[Table 1]

```
int offsetX = 0;   int offsetY = 0;
    int offsetX0 = 0; int offsetX1 = 0; int offsetX2 = pu.chType == CHANNEL_TYPE_LUMA ?
pu.Y().width >> 1 : pu.Cb().width >> 1;
    int offsetY0 = 0; int offsetY1 = 0; int offsetY2 = pu.chType == CHANNEL_TYPE_LUMA ?
pu.Y().height >> 1 : pu.Cb().height >> 1;


    const int iNAIntervalHor = std::max((int)(pu.chType == CHANNEL_TYPE_LUMA ?
pu.Y().width * 2 : pu.Cb().width * 2) >> 1, 4);
    const int iNAIntervalVer = std::max((int)(pu.chType == CHANNEL_TYPE_LUMA ?
pu.Y().height * 2 : pu.Cb().height * 2) >> 1, 4);
    const int iNACANDIDATE_NUM[7] = { 5, 9, 9, 9, 9, 9, 9 };
    const int idxMap[7][9] = {
      { 0, 1, 2, 3, 4 },
      { 0, 1, 2, 3, 4, 5, 6, 7, 8 },
      { 0, 1, 2, 3, 4, 5, 6, 7, 8 },
      { 0, 1, 2, 3, 4, 5, 6, 7, 8 },
      { 0, 1, 2, 3, 4, 5, 6, 7, 8 },
      { 0, 1, 2, 3, 4, 5, 6, 7, 8 },
      { 0, 1, 2, 3, 4, 5, 6, 7, 8 }
    };
```

[Table 2]

```
for (int iDistanceIndex = 0; iDistanceIndex < 7; iDistanceIndex++)
{
    const int iNADistanceHor = iNAIntervalHor * (iDistanceIndex + 1);
    const int iNADistanceVer = iNAIntervalVer * (iDistanceIndex + 1);


        for (int NASPIdx = 0; NASPIdx < iNACANDIDATE_NUM[iDistanceIndex];
NASPIdx++)
        {
        switch (idxMap[iDistanceIndex][NASPIdx])
        {
        case 0: offsetX = offsetX0 = -iNADistanceHor - 1;              offsetY = offsetY0 =
iNAIntervalVer + iNADistanceVer - 1;   break;
        case 1: offsetX = offsetX1 = iNAIntervalHor + iNADistanceHor - 1;   offsetY = offsetY1
```

[Table 3]

```
= -iNADistanceVer - 1;                    break;
        case 2: offsetX = offsetX2;         offsetY = offsetY1;        break;
        case 3: offsetX = offsetX0;         offsetY = offsetY2;        break;
        case 4: offsetX = offsetX0;         offsetY = offsetY1;        break;
        case 5: offsetX = -1;               offsetY = offsetY0;        break;
        case 6: offsetX = offsetX1;         offsetY = -1;              break;
        case 7: offsetX = offsetX0 >> 1;    offsetY = offsetY0;        break;
        case 8: offsetX = offsetX1;         offsetY = offsetY1 >> 1;   break;
        default: printf("error!"); exit(0); break;
        }


        NonAdj_pos = Position(x + offsetX, y + offsetY);
        ...
        }
}
```

As another example, when a top-left coordinate of a current block is (x, y), and a width and a height of the current block are W and H, respectively, non-adjacent reference positions may be represented as NonAdj_pos of a combination of Table 4 and Table 5. However, this is merely an example, and other non-adjacent positions may be defined by an agreement between an image encoding apparatus (100) and an image decoding apparatus (200).

[Table 4]

```
const int iNAIntervalHor = std::max((int)(pu.chType == CHANNEL_TYPE_LUMA
pu.Y().width * 2 : pu.Cb().width * 2) >> 1, 4);
   const int iNAIntervalVer = std::max((int)(pu.chType == CHANNEL_TYPE_LUMA
pu.Y().height * 2 : pu.Cb().height * 2) >> 1, 4);
const int iNACANDIDATE_NUM2[7] = { 4, 4, 4, 4, 4, 4, 4 };
const int idxMap2[7][5]      = { { 0, 1, 2, 3 }, { 0, 1, 2, 3 }, { 0, 1, 2, 3 }, { 0, 1, 2, 3 },
                                 { 0, 1, 2, 3 }, { 0, 1, 2, 3 }, { 0, 1, 2, 3 } };


for (int iDistanceIndex = 0; iDistanceIndex < 7; iDistanceIndex++)
{
    const int iNADistanceHor = iNAIntervalHor * (iDistanceIndex + 1);
    const int iNADistanceVer = iNAIntervalVer * (iDistanceIndex + 1);
```

[Table 5]

```
      for (int NASPIdx = 0; NASPIdx < iNACANDIDATE_NUM2[iDistanceIndex;
NASPIdx++)
    {
      switch (idxMap2[iDistanceIndex][NASPIdx])
      {
      case 0: offsetX = offsetX0 = -iNADistanceHor - 1;          offsetY = offsetY2 +
((iNAIntervalVer + iNADistanceVer - 1 - offsetY2) >> 1); break;
      case 1: offsetX = offsetX2 + ((iNAIntervalHor + iNADistanceHor - 1 - offsetX2) >> 1);
offsetY = offsetY0 = -iNADistanceVer - 1; break;
      case 2: offsetX = offsetX0;                         offsetY = offsetY0 + ((offsetY2
- offsetY0) >> 1); break;
      case 3: offsetX = offsetX0 + ((offsetX2 - offsetX0) >> 1); offsetY = offsetY0; break;
      default: printf("error!"); exit(0); break;
      }

      NonAdj_pos = Position(x + offsetX, y + offsetY);
        ...
    }
  }
```

According to one embodiment, an intra mode stored in a history-based list may be included as an intra mode candidate. That is, among candidates in the SGPM candidate list, a prediction mode of one candidate (a second candidate) may be determined as an intra prediction mode stored in the history-based list. For example, when an already reconstructed block is coded by SGPM, intra modes used in respective partitions of the block may be included in the history-based list. Accordingly, intra modes stored in the history-based list may be included as intra mode candidates of respective partitions of a current block. In addition, in a process of storing intra modes in the history-based list, a separate history-based list may be constructed for each partition, or a single history-based list may be constructed regardless of partitions. However, this is merely an example of constructing a history-based list, and may be differently defined by an agreement between an image encoding apparatus (100) and an image decoding apparatus (200).

The history-based list may be initialized whenever a CTU row changes. In addition, the history-based list may be initialized for each CTU. A size of the history-based list may be defined by an agreement between The image encoding apparatus (100) and The image decoding apparatus (200). For example, the size of the history-based list may be 6.

According to one embodiment, an intra mode derived from a DIMD mode and/or an intra mode derived from a TIMD mode may be included as an intra mode candidate of each partition of SGPM. That is, among candidates in the SGPM candidate list, a prediction mode of one candidate (a second candidate) may be determined as an intra prediction mode derived based on a DIMD mode or a TIMD mode. In this case, a plurality of intra modes derived from the DIMD mode and/or the TIMD mode may be included as intra mode candidates. For example, a best mode and a secondary mode may be included as intra mode candidates. Alternatively, an intra mode derived by using an above template area of the DIMD mode and/or the TIMD mode, and an intra mode derived by using a left template area may be included as intra mode candidates for each partition of SGPM.

According to one embodiment, an intra mode mapped to (corresponding to) a partitioning direction of SGPM may be included as an intra mode candidate for each partition of SGPM. That is, among candidates in the SGPM candidate list, a prediction mode of one candidate (a second candidate) may be determined as a directional intra prediction mode corresponding to a partitioning direction of the second candidate. For example, when a block is partitioned in a vertical direction, mode 50 corresponding to the partitioning direction may be included as an intra mode candidate for each partition. Here, mode 50 is a mode that performs intra prediction in a vertical direction, and may be configured such that a mode other than mode 50 is indicated by an index according to an agreement between The image encoding apparatus (100) and The image decoding apparatus (200).

According to one embodiment, an intra mode perpendicular to an intra mode mapped to (corresponding to) a partitioning direction of SGPM may be included as an intra mode candidate for each partition of SGPM. That is, among candidates in the SGPM candidate list, a prediction mode of one candidate (a second candidate) may be determined as an intra prediction mode perpendicular to a partitioning direction of the second candidate (perpendicular to a directional intra prediction mode corresponding to the partitioning direction of the second candidate). For example, when a block is partitioned in a vertical direction, mode 18 perpendicular to the direction may be included as an intra mode candidate for each partition. Here, mode 18 is a mode that performs intra prediction in a horizontal direction, and may be configured such that a mode other than mode 18 is indicated by an index according to an agreement between The image encoding apparatus (100) and The image decoding apparatus (200).

According to one embodiment, when a reference position adjacent to a current block or a reference position non-adjacent to the current block is coded by an IBC prediction mode, an IntraTMP mode, or an inter mode (Inter mode), an intra mode stored at the reference position may be included as an intra mode candidate of SGPM. For example, when an already reconstructed block is coded by an IBC prediction mode, an IntraTMP mode, or an inter mode, an intra mode stored at a position indicated by a block vector (or a motion vector) stored at a position of the already reconstructed block may be stored at the position of the already reconstructed block by using the block vector (or the motion vector). Accordingly, when a reference position is coded by an IBC prediction mode, an IntraTMP mode, or an inter mode, an intra mode stored at the reference position may be included as an intra mode candidate of SGPM.

According to one embodiment, a planar mode or a DC mode may be included as an intra mode candidate for each partition of SGPM.

According to one embodiment, a number of intra mode candidates for each partition of SGPM may be limited. For example, a maximum of three intra mode candidates may be included for each partition. When the number of intra mode candidates is limited in this manner, prediction accuracy may vary depending on an order in which intra mode candidates are constructed. In order to increase prediction accuracy, a specific method of including intra mode candidates may be defined and used between The image encoding apparatus (100) and The image decoding apparatus (200). For example, in the specific method of including intra mode candidates, intra mode candidates of each partition may be constructed in an order of a TIMD intra mode, an intra mode mapped to (corresponding to) a block partitioning direction, an intra mode at a left position of the current block, an intra mode at a top position of the current block, an intra mode at a left-bottom position of the current block, an intra mode at a top-right position of the current block, an intra mode at a left-top position of the current block, an intra mode perpendicular to an intra mode corresponding to the partitioning direction, and a planar mode. However, this is merely an example, and an order of constructing intra mode candidates for each partition may vary, and the order may be changed according to an agreement between The image encoding apparatus (100) and The image decoding apparatus (200). In addition, as in the preceding embodiments, intra mode candidates of each partition may also vary depending on a block partitioning direction.

**Embodiment 2**

Embodiment 2 relates to a method of utilizing block vector information of SGPM.

In conventional SGPM, an SGPM candidate list is constructed only with combinations of a planar mode, a DC mode, and directional modes (modes 2 to 67) for each partition, and combinations of an IntraTMP mode and an IBC prediction mode are not considered. However, when an IntraTMP mode or an IBC prediction mode is included as an intra mode candidate for each partition of SGPM, block vector information of SGPM (block vector information included in the SGPM candidate list) may be utilized in various manners, and through this, coding performance may be improved.

According to one embodiment, when a block vector candidate list of an IBC prediction mode is constructed, block vector information of SGPM may be included in the block vector candidate list. The IBC prediction mode may manage a plurality of block vector candidates as a candidate list (a block vector candidate list). One or more pieces of block vector information among block vector candidates constructed in the block vector candidate list may be identified through signaling. Specifically, the IBC prediction mode may be divided into an IBC merge mode that does not signal an mvd (motion vector difference) and an IBC mode that signals an mvd, and methods of constructing block vector candidate lists thereof may be different. In this case, block vector information of SGPM may be included in the block vector candidate list of the IBC mode. In addition, block vector information of SGPM may be included in the block vector candidate list of the IBC merge mode. Since methods of constructing block vector candidate lists may be different in the IBC mode and the IBC merge mode, a method of configuring block vector information of SGPM in the block vector candidate list (such as an order or a condition) may be different.

According to one embodiment, an IntraTMP mode may manage a plurality of block vector candidates as a candidate list, and one or more pieces of block vector information among block vector candidates included in the candidate list may be identified through signaling. In this case, block vector information of SGPM may be included in the block vector candidate list of the IntraTMP mode.

According to one embodiment, in a DBV mode, block vector information stored in one or more luma blocks corresponding to a current chroma block and/or block vector information stored around one or more corresponding luma blocks may be utilized. For example, when a luma block is coded by an IBC prediction mode or an IntraTMP mode, block vector information thereof may be stored, and the stored block vector information may be utilized for coding of a chroma block. Accordingly, when block vectors are utilized in SGPM, block vector information of SGPM may be utilized in the DBV mode, and through this, coding performance may be improved.

According to one embodiment, when one or more luma blocks corresponding to a current chroma block are coded by SGPM, block vector information of SGPM may be utilized for coding of the current chroma block. In using a block vector of a luma block (that is, block vector information of a luma block coded by SGPM) in a chroma block, block vector information of the luma block may be scaled in different manners depending on a color data format (for example, YUV 4:2:0, YUV 4:2:2, or YUV 4:4:4).

According to one embodiment, during a process of filling an MPM list in an MPM mode, when an already reconstructed block is coded by SGPM and a block vector is used, a planar mode may be included in the MPM list. In addition, during a process of filling an MPM list in an MPM mode, when an already reconstructed block is coded by SGPM and a block vector is used, a DC mode may be included in the MPM list. In addition, during a process of filling an MPM list in an MPM mode, when an already reconstructed block is coded by SGPM and a block vector is used, an intra mode of a partition among partitions of the already reconstructed block for which a block vector is not used may be included in the MPM list.

According to one embodiment, in a chroma DM mode, when a luma block is coded by SGPM and a block vector is used, a planar mode may be used for coding of a chroma block. In addition, in the chroma DM mode, when a luma block is coded by SGPM and a block vector is used, a DC mode may be used for coding of a chroma block. In addition, in the chroma DM mode, when a luma block is coded by SGPM and a block vector is used, an intra mode of a partition among partitions of the luma block for which a block vector is not used may be used for coding of the chroma block.

According to one embodiment, in the chroma DM mode, when a luma block is coded by SGPM and a block vector is used, a block vector used for coding of the luma block may be scaled according to a color data format (for example, YUV 4:2:0, YUV 4:2:2, or YUV 4:4:4), and a chroma reference block at a position indicated by the scaled block vector may be copied and used as a current chroma block. In addition, when a luma block is coded by SGPM and all partitions of the luma block use block vectors, a chroma block may be predicted by using a block vector of one of the partitions. Among two block vectors, a block vector to be used for prediction of the chroma block may be determined by an agreement between The image encoding apparatus (100) and The image decoding apparatus (200). For example, it may be agreed to use a block vector of partition 0. As another example, when a luma block is coded by SGPM and all partitions of the luma block use block vectors, both of the two block vectors may be used for prediction of the chroma block. Specifically, two chroma prediction blocks may be generated through two scaled block vectors, and a final prediction block may be generated by performing a weighted sum thereof. In this case, a weight value may be determined by an agreement between The image encoding apparatus (100) and The image decoding apparatus (200). For example, the weight value may be a weighted average.

According to one embodiment, during a process of constructing an intra candidate list of a TMRL mode, when an already reconstructed block is coded by SGPM and a block vector is used, a planar mode may be included in the intra candidate list of the TMRL mode. In addition, during the process of constructing the intra candidate list of the TMRL mode, when an already reconstructed block is coded by SGPM and a block vector is used, a DC mode may be included in the intra candidate list of the TMRL mode. In addition, during the process of constructing the intra candidate list of the TMRL mode, when an already reconstructed block is coded by SGPM and a block vector is used, an intra mode of a partition among partitions of the already reconstructed block for which a block vector is not used may be included in the intra candidate list of the TMRL mode.

According to one embodiment, during a process of filling intra mode candidates for each partition of SGPM, when an already reconstructed block is coded by SGPM and a block vector is used, a planar mode may be included as an intra mode candidate for each partition. In this case, intra mode candidates of each partition may vary depending on a partitioning direction. For example, an intra mode obtained by referring to an already reconstructed block close to each partition may be included as an intra mode candidate. That is, an intra mode of an already reconstructed block may or may not be included as an intra mode candidate for each partition depending on a position of the already reconstructed block.

According to one embodiment, during a process of filling intra mode candidates for each partition of SGPM, when an already reconstructed block is coded by SGPM and a block vector is used, a DC mode may be included as an intra mode candidate for each partition. In this case, intra mode candidates of each partition may vary depending on a partitioning direction. For example, an intra mode obtained by referring to an already reconstructed block close to each partition may be included as an intra mode candidate. That is, an intra mode of an already reconstructed block may or may not be included as an intra mode candidate for each partition depending on a position of the already reconstructed block.

According to one embodiment, during a process of filling intra mode candidates for each partition of SGPM, when an already reconstructed block is coded by SGPM and a block vector is used, an intra mode of a partition among partitions of the already reconstructed block for which a block vector is not used may be included as an intra mode candidate for each partition. In this case, intra mode candidates of each partition may vary depending on a partitioning direction. For example, an intra mode obtained by referring to an already reconstructed block close to each partition may be included as an intra mode candidate. That is, an intra mode of an already reconstructed block may or may not be included as an intra mode candidate for each partition depending on a position of the already reconstructed block.

According to one embodiment, when an already reconstructed block is coded by SGPM and a block vector is used, each partition of SGPM may utilize a block vector of the already reconstructed block (or information indicating the block vector) as a candidate. For example, a prediction block for each partition of SGPM of a current block may be generated by copying a reference block at a position indicated by a block vector candidate to the current block.

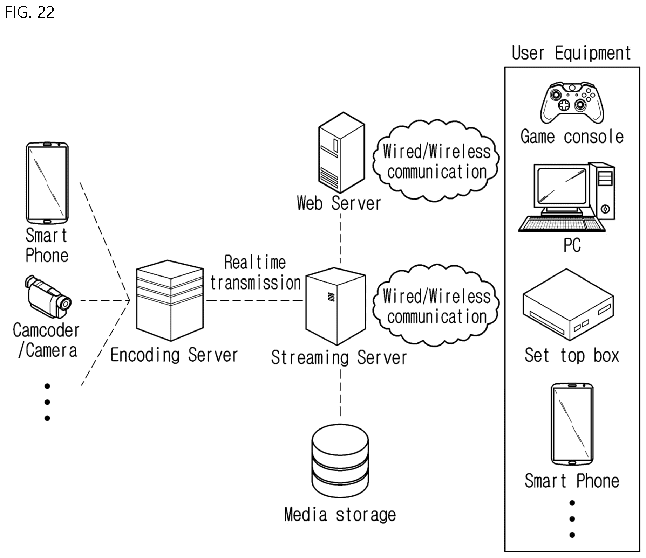

FIG. 22 is a diagram illustrating, by way of example, a content streaming system to which an embodiment according to the present disclosure may be applied.

As illustrated in FIG. 22, a content streaming system to which embodiments of the present disclosure are applied may include an encoding server, a streaming server, a web server, a media storage, a user device, and a multimedia input device.

The encoding server performs a role of compressing content input from multimedia input devices such as a smartphone, a camera, or a camcorder into digital data to generate a bitstream and transmitting the bitstream to the streaming server. As another example, when multimedia input devices such as a smartphone, a camera, or a camcorder directly generate a bitstream, the encoding server may be omitted.

The bitstream may be generated by an image encoding method and/or an image encoding apparatus to which embodiments of the present disclosure are applied, and the streaming server may temporarily store the bitstream in a process of transmitting or receiving the bitstream.

The streaming server may transmit multimedia data to a user device based on a user request through the web server, and the web server may serve as a medium for informing a user of available services. When a user requests a desired service from the web server, the web server may transmit the request to the streaming server, and the streaming server may transmit multimedia data to the user. In this case, the content streaming system may include a separate control server, and in this case, the control server may perform a role of controlling command/response among respective devices in the content streaming system.

The streaming server may receive content from the media storage and/or the encoding server. For example, when content is received from the encoding server, the content may be received in real time. In this case, in order to provide a smooth streaming service, the streaming server may store the bitstream for a predetermined time.

Examples of the user device may include a mobile phone, a smart phone, a laptop computer, a digital broadcasting terminal, a PDA (personal digital assistants), a PMP (portable multimedia player), a navigation device, a slate PC, a tablet PC, an ultrabook, a wearable device (for example, a watch-type device (smartwatch), a glasses-type device (smart glass), or an HMD (head mounted display)), a digital TV, a desktop computer, and digital signage.

Each server in the content streaming system may be operated as a distributed server, and in this case, data received at each server may be processed in a distributed manner.

The scope of the present disclosure includes software or machine-executable instructions (for example, an operating system, an application, firmware, a program, and the like) that cause operations according to methods of various embodiments to be executed on a device or a computer, and a non-transitory computer-readable medium in which such software or instructions are stored and executable on a device or a computer.

[Industrial Applicability]

Embodiments according to the present disclosure may be used to encode/decode an image.

**Claims**

1. An image decoding method performed by an image decoding apparatus, comprising:

constructing candidates for a spatial geometric partition mode (SGPM), wherein each of the candidates includes a prediction mode for an intra prediction mode of each partition divided by a partition mode of the SGPM; and predicting a current block based on one of the candidates,
wherein a prediction mode of a first candidate among the candidates is determined as information indicating an intra block copy prediction mode of a reference position.

2. The image decoding method of claim 1, wherein a prediction mode of a second candidate among the candidates is determined based on a partitioning direction indicated by a partition mode of the second candidate.

3. The image decoding method of claim 2, wherein the prediction mode of the second candidate is determined based on reference positions adjacent to each partition divided in the partitioning direction of the second candidate among predetermined reference positions.

4. The image decoding method of claim 2, wherein the prediction mode of the second candidate is determined as a directional intra prediction mode corresponding to the partitioning direction of the second candidate or a directional intra prediction mode perpendicular to the directional intra prediction mode.

5. The image decoding method of claim 1, wherein a prediction mode of a second candidate among the candidates is determined based on a reference position not adjacent to the current block.

6. The image decoding method of claim 1, wherein a prediction mode of a second candidate among the candidates is determined as an intra prediction mode stored in a history-based list.

7. The image decoding method of claim 6, wherein the history-based list is constructed with intra prediction modes of blocks reconstructed by the SGPM mode.

8. The image decoding method of claim 1, wherein a prediction mode of a second candidate among the candidates is determined as a DC mode.

9. The image decoding method of claim 1, wherein a prediction mode of a second candidate among the candidates is determined as an intra prediction mode derived based on DIMD (decoder-side intra mode derivation) or TIMD (template based intra mode derivation).

10. The image decoding method of claim 1, wherein a maximum number of candidates included in a candidate list has a predetermined value, and an intra prediction mode derived based on TIMD, intra prediction modes of predetermined reference positions adjacent to the current block, a directional intra prediction mode corresponding to each partitioning direction of the candidates, and a directional intra prediction mode perpendicular to the directional intra prediction mode are determined as prediction modes of the candidates according to a predetermined order.

11. The image decoding method of claim 10, wherein the predetermined order is an intra prediction mode derived based on TIMD, a directional intra prediction mode corresponding to the partitioning direction, intra prediction modes of predetermined reference positions adjacent to the current block, and a directional intra prediction mode perpendicular to the directional intra prediction mode.

12. The image decoding method of claim 1, wherein, based on a prediction mode of an already reconstructed block being SGPM and a block vector being used for prediction of at least one of partitions within the already reconstructed block, one of predetermined parameters is determined as a prediction mode of a second candidate among the candidates, and the predetermined parameters include a planar mode, a DC mode, an intra prediction mode of a partition for which the block vector is not used for prediction, and the block vector.

13. An image encoding method performed by an image encoding apparatus, comprising:

constructing candidates for a spatial geometric partition mode (SGPM), wherein each of the candidates includes a prediction mode for an intra prediction mode of each partition divided by a partition mode of the SGPM; and predicting a current block based on one of the candidates, wherein a prediction mode of a first candidate among the candidates is determined as information indicating an intra block copy prediction mode of a reference position.

14. A computer-readable recording medium storing a bitstream generated by the image encoding method of claim 13.

15. A method of transmitting a bitstream generated by an image encoding apparatus, wherein the image encoding method comprises:

constructing candidates for a spatial geometric partition mode (SGPM), wherein each of the candidates includes a prediction mode for an intra prediction mode of each partition divided by a partition mode of the SGPM; and predicting a current block based on one of the candidates,

wherein a prediction mode of a first candidate among the candidates is determined as information indicating an intra block copy prediction mode of a reference position.

FIG. 1

FIG. 2

FIG. 3

FIG. 4

```
              ┌──────────┐
              │  Start   │
              └────┬─────┘
                   │                              S400
   ┌───────────────▼──────────────────────────────┐
   │ Perform intra prediction(determination of     │
   │ intra prediction mode/type, derivation of     │
   │ neighboring reference samples, generation of  │
   │ prediction samples)                           │
   └───────────────┬──────────────────────────────┘
                   │                              S410
   ┌───────────────▼──────────────────────────────┐
   │ Residual process(derivation of residual       │
   │ samples based on prediction samples)          │
   └───────────────┬──────────────────────────────┘
                   │                              S420
   ┌───────────────▼──────────────────────────────┐
   │ Encode image/video information including      │
   │ prediction information and residual           │
   │ information                                   │
   └───────────────┬──────────────────────────────┘
                   │
              ┌────▼─────┐
              │   End    │
              └──────────┘
```

FIG. 5

185

original picture →

reconstructed reference area in current picture →

intra prediction mode/type determination unit (186)

reference sample derivation unit (187)

prediction sample derivation unit (188)

→ intra prediction mode/type information

→ prediction sample(s)

intra prediction unit

FIG. 6

```
                        ┌─────────┐
                        │  Start  │
                        └─────────┘
                             │
                             ▼                              S600
   ┌──────────────────────────────────────────────────────┐
   │  Derive an intra prediction mode/type for the         │
   │  current block based on received prediction           │
   │  information                                          │
   └──────────────────────────────────────────────────────┘
                             │
                             ▼                              S610
   ┌──────────────────────────────────────────────────────┐
   │         Derive neighboring reference samples          │
   └──────────────────────────────────────────────────────┘
                             │
                             ▼                              S620
   ┌──────────────────────────────────────────────────────┐
   │     Perform prediction(generation of prediction       │
   │     samples)                                          │
   └──────────────────────────────────────────────────────┘
                             │
                             ▼                              S630
   ┌──────────────────────────────────────────────────────┐
   │    Derive residual samples based on residual          │
   │    information                                        │
   └──────────────────────────────────────────────────────┘
                             │
                             ▼                              S640
   ┌──────────────────────────────────────────────────────┐
   │  Generate a reconstructed block/picture               │
   │  based on prediction samples and residual samples     │
   └──────────────────────────────────────────────────────┘
                             │
                             ▼
                        ┌─────────┐
                        │   End   │
                        └─────────┘
```

FIG. 7

265

intra prediction
mode/type determination unit
(266)

reference
sample derivation unit
(267)

prediction
sample derivation unit
(268)

intra prediction unit

Intra prediction
mode/type information

reconstructed reference area in
current picture

prediction sample

FIG. 8

```
                          ┌─────────┐
                          │  Start  │
                          └────┬────┘
                               │                    S800
   ┌───────────────────────────┼───────────────────────────┐
   │          Construct an MPM list                         │
   └───────────────────────────┬───────────────────────────┘
                               │                    S810
   ┌───────────────────────────┼───────────────────────────┐
   │   Determine an intra prediction mode for current block │
   └───────────────────────────┬───────────────────────────┘
                               │                    S820
   ┌───────────────────────────┼───────────────────────────┐
   │  Encode intra prediction mode information(including    │
   │  mpm flag, not planar flag, mpm idx and/or remaining   │
   │  intra prediction mode information)                    │
   └───────────────────────────┬───────────────────────────┘
                               │
                          ┌────┴────┐
                          │   End   │
                          └─────────┘
```

FIG. 9

```
                    ( Start )
                         |
                         |                    S900
                         v
+--------------------------------------------------------+
| Obtain intra prediction mode information(including mpm |
| flag, not planar flag, mpm idx and/or remaining intra  |
| prediction mode information) from a bitstream          |
+--------------------------------------------------------+
                         |
                         |                    S910
                         v
+--------------------------------------------------------+
|               Construct an MPM list                    |
+--------------------------------------------------------+
                         |
                         |                    S920
                         v
+--------------------------------------------------------+
|      Determine an intra prediction mode of the         |
|      current block based on MPM list and intra         |
|      prediction mode information                       |
+--------------------------------------------------------+
                         |
                         v
                    ( End )
```

FIG. 10

FIG. 11

FIG. 12

FIG. 13

FIG. 14

FIG. 15

(a)

```
If( cu_sgpm_flag )
{
  partition_mode_idx
  intra_pred_mode0_idx
  intra_pred_mode1_idx
}
```

(b)

```
If( cu_sgpm_flag )
{
  sgpm_cand_idx
}
```

```
partition_mode_idx
intra_pred_mode0_idx
intra_pred_mode1_idx
```

(c)

FIG. 16

reference line 3

reference line 2

reference line 1

top template

left template

Current block

FIG. 17

LUMA                    CHROMA

FIG. 18

```
                    ┌──────────────┐
                    │    Start     │
                    └──────┬───────┘
                           │                  S1800
                           ▼
        ┌──────────────────────────────────────┐
        │             SGPM flag                 │
        └──────────────────┬───────────────────┘
                           │                  S1810
                           ▼
        ┌──────────────────────────────────────┐
        │      Generate a SGPM candidate list   │
        └──────────────────┬───────────────────┘
                           │                  S1820
                           ▼
        ┌──────────────────────────────────────┐
        │      Generate a prediction block      │
        └──────────────────┬───────────────────┘
                           │
                           ▼
                    ┌──────────────┐
                    │     End      │
                    └──────────────┘
```

FIG. 19

Template area

Part0    Part1

FIG. 20

TL | | | | T | TR

Partition 0 | Partition 1

L

BL

(a)

TL | | | | T | TR

Partition 0

Partition 1

L

BL

(b)

FIG. 21

Current
block

: Adjacent position

: Non-adjacent position

FIG. 22

# EP 4 770 094 A1

<table>
<tr><td colspan="2">**INTERNATIONAL SEARCH REPORT**</td><td>International application No.<br>**PCT/KR2024/012330**</td></tr>
</table>

| | |
|---|---|
| **A. CLASSIFICATION OF SUBJECT MATTER** | |

**H04N 19/593**(2014.01)i; **H04N 19/157**(2014.01)i; **H04N 19/176**(2014.01)i; **H04N 19/119**(2014.01)i; **H04N 19/105**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 19/11(2014.01); H04N 19/132(2014.01); H04N 19/176(2014.01); H04N 19/196(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 공간적 지오메트릭 분할 모드(spatial geometric partition mode, SGPM), 후보(candidate), 인트라(intra), 예측(predict), 인트라 블록 카피(intra block copy, IBC)

**C. DOCUMENTS CONSIDERED TO BE RELEVANT**

| Category* | Citation of document, with indication, where appropriate, of the relevant passages | Relevant to claim No. |
|---|---|---|
| Y | FANG, Cheng et al. Non-EE2: SGPM combined with IntraTMP. JVET-AC0097-v2, Joint Video Experts Team (JVET) of ITU-T SG 16 WP 3 and ISO/IEC JTC 1/SC 29, 29th Meeting, by teleconference. pp. 1-3, 11 January 2023.<br>See page 1; and figure 1. | 1-15 |
| Y | WO 2022-063729 A1 (INTERDIGITAL VC HOLDINGS FRANCE, SAS) 31 March 2022 (2022-03-31)<br>See page 1, lines 4-5; page 8, lines 2-7; page 12, lines 16-18; page 13, lines 18-24; page 14, lines 15-17 and page 18, lines 23-29; and figure 7. | 1-15 |
| Y | COBAN, Muhammed et al. Algorithm description of Enhanced Compression Model 9 (ECM 9). JVET-AD2025, Joint Video Experts Team (JVET) of ITU-T SG 16 WP 3 and ISO/IEC JTC 1/SC 29, 30th Meeting. Antalya, TR. pp. 1-75, 03 July 2023.<br>See pages 13, 20-24 and 42-43; and figure 21. | 2-11 |
| A | US 2023-0113104 A1 (TENCENT AMERICA LLC) 13 April 2023 (2023-04-13)<br>See claims 1-6. | 1-15 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 November 2024** | **22 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/012330**

### C. DOCUMENTS CONSIDERED TO BE RELEVANT

| Category* | Citation of document, with indication, where appropriate, of the relevant passages | Relevant to claim No. |
|---|---|---|
| A | WO 2023-132622 A1 (LG ELECTRONICS INC.) 13 July 2023 (2023-07-13)<br>See claims 1-10. | 1-15 |

Form PCT/ISA/210 (second sheet) (July 2022)

## INTERNATIONAL SEARCH REPORT
### Information on patent family members

International application No.

**PCT/KR2024/012330**

| Patent document cited in search report | | | Publication date (day/month/year) | Patent family member(s) | | | Publication date (day/month/year) |
|---|---|---|---|---|---|---|---|
| WO | 2022-063729 | A1 | 31 March 2022 | CN | 116195254 | A | 30 May 2023 |
| | | | | EP | 4218240 | A1 | 02 August 2023 |
| | | | | JP | 2023-543985 | A | 19 October 2023 |
| | | | | US | 2023-0396805 | A1 | 07 December 2023 |
| US | 2023-0113104 | A1 | 13 April 2023 | CN | 116636216 | A | 22 August 2023 |
| | | | | EP | 4233313 | A1 | 30 August 2023 |
| | | | | EP | 4233313 | A4 | 21 February 2024 |
| | | | | JP | 2024-516352 | A | 15 April 2024 |
| | | | | KR | 10-2023-0117600 | A | 08 August 2023 |
| | | | | WO | 2023-064665 | A1 | 20 April 2023 |
| WO | 2023-132622 | A1 | 13 July 2023 | CN | 118511511 | A | 16 August 2024 |
| | | | | EP | 4462776 | A1 | 13 November 2024 |
| | | | | KR | 10-2024-0112882 | A | 19 July 2024 |

Form PCT/ISA/210 (patent family annex) (July 2022)